(19) Europäisches Patentamt / European Patent Office / Office européen des brevets

(11) **EP 2 682 633 A2**

(12) # EUROPEAN PATENT APPLICATION

(43) Date of publication:
08.01.2014 Bulletin 2014/02

(51) Int Cl.:
*F16D 55/2265* (2006.01)   *F16D 55/227* (2006.01)
*F16D 65/095* (2006.01)   *F16D 69/04* (2006.01)

(21) Application number: 13004789.7

(22) Date of filing: 27.09.2012

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 28.09.2011 JP 2011212414
28.09.2011 JP 2011212415
17.10.2011 JP 2011228217
17.10.2011 JP 2011228218

(62) Document number(s) of the earlier application(s) in
accordance with Art. 76 EPC:
**12186200.7 / 2 574 812**

(71) Applicant: **AKEBONO BRAKE INDUSTRY CO.,
LTD.**
**Chuo-ku**
**Tokyo (JP)**

(72) Inventor: **Yoshida, Hirokazu**
**Tokyo, 103-8534 (JP)**

(74) Representative: **Grünecker, Kinkeldey,
Stockmair & Schwanhäusser
Anwaltssozietät
Leopoldstrasse 4
80802 München (DE)**

(54) **An outer brake pad for a disc brake**

(57)   There is provided an outer brake pad (80) for a floating disc brake apparatus (10), configured to be held by a caliper (30) which includes a claw portion formed with a plurality of loosely fitting portions (48a, 48b) in an inner wall thereof, wherein a length of each of the loosely fitting portions (48a, 48b) in a circumferential direction of a rotor (100) is equal to or longer than a length of each of the loosely fitting portions (48a, 48b) a radial direction of the rotor, and configured to transmit braking torque to a support (12) which holds the caliper (30), the outer brake pad (80) comprising:a plurality of protruding por- tions (88a, 88b) which are respectively loosely fitted in the loosely fitting portions (48a, 48b) , wherein a shape of each of the protruding portions (88a, 88b)viewed from an axial direction of the rotor (100) has a major axis which is directed in the radial direction of the rotor (100) and a minor axis which is directed in the circumferential direction of the rotor (100), and wherein an abutment portion (92a, 92b) of the outer brake pad (80) configured to come in contact with the support (12) is provided at outer side of the rotor (100) in the radial direction of the rotor (100) than a peripheral edge of the rotor (100).

*Fig. 1*

EP 2 682 633 A2

*Fig. 22*

## Description

Technical Field

The present invention relates to a disc brake apparatus and more particularly to a caliper floating disc brake apparatus in which braking torque is received by a support.

Background Art

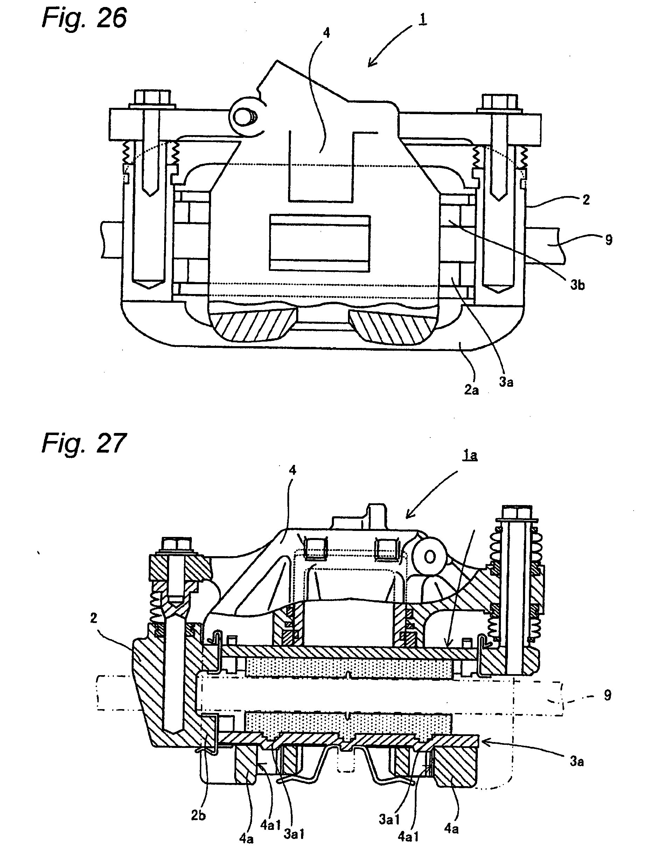

As a floating caliper disc brake apparatus in which braking torque is received by a support, there is known such a disc brake apparatus as disclosed in PTL 1. As shown in Fig. 26, the disc brake apparatus disclosed in PTL 1 includes basically a support 2, brake pads 3a, 3b which are held by the support 2 and a caliper 4. In the disc brake apparatus 1 shown in Fig. 26, braking torque (pressing force by the brake pads) which is generated when the brakes are applied is designed to be received directly by only torque receiving potions of the support 2 which holds the brake pads 3a, 3b.

To deal with this configuration, a configuration is adopted in which a bridge 2a is provided on an outer side of the support 2 which connects together a torque receiving portion which is disposed at a rotor 9 rotation exit side and a torque receiving portion which is disposed at a rotor 9 rotation entrance side of the support 2, so as to enhance the rigidity of the support 2.

However, when the bridge 2a is provided on the outer side of the support 2 as in the case with the disc brake apparatus 1 disclosed in PTL 1, the disc brake apparatus is enlarged in size, which eventually calls for an increase in weight thereof.

In contrast to this disc brake apparatus, there are disclosed in PTLs 2 and 3 disc brake apparatuses which achieve a reduction in size and weight thereof by eliminating the outer bridge from the support.

In a disc brake apparatus disclosed in PTL 2, as shown in Fig. 27, a brake pad 3a which is disposed on an outer side of a rotor 9 has protruding portions 3a1 which fit in recess portions 4a1 which are formed on claw portions 4a which make up a caliper 4. Additionally, a support 2 is formed asymmetrical on a rotation entrance side and a rotation exit side of the rotor, and hence, a torque receiving portion 2b is also provided additionally on an outer side of the support 2 across the rotor 9 only on the rotation exit side of the rotor when the vehicle is moving forwards.

In the disc brake apparatus 1a which is characterized as described above, braking torque which is generated while the vehicle is moving forwards is received by the torque receiving portions which make up the support 2 on both the inner side and the outer side. On the other hand, braking torque which is generated while the vehicle is moving rearwards is received by the torque receiving portions of the support 2 on the inner side, whereas on the outer side, the braking torque so generated is transmitted to the caliper 4 via the protruding portions 3a1 which are formed on the outer brake pad and is then transmitted to the support 2 via the caliper 4.

In addition, as shown in Fig. 28, a disc brake apparatus disclosed in PTL 3 is also configured so that an outer brake pad 3a is attached to a claw portion 4a which makes up a caliper 4 through press fitting of protruding portions in recess portions. Additionally, in the disc brake apparatus 1b disclosed in PTL 3, as shown in Fig. 29, a relationship between a gap A defined between a guide pin 5a at the rotation entrance side of the rotor and a sliding sleeve 6a which allows the guide pin 5a to slide, a gap B defined between a guide pin 5b at the rotation exit side of the rotor and a sliding sleeve 6b and a gap C defined between an outer circumferential portion of the sliding sleeve 6b and a lug portion (a protruding outer edge portion) of the outer pad 3a is set so that A<B<C, whereby the number of portions which constitute torque receiving portions for the outer brake pad 3a is made to increase step by step as the braking torque is strengthened.

Specifically, in an initial braking, braking torque is received by the contact of the guide pin 5a on a rotation entrance side of the rotor with the sliding sleeve 6a, and the braking torque so received is then transmitted to a support 2. When the braking torque is increased, the guide pin 5b on a rotation exit side of the rotor is also brought into contact with the sliding sleeve 6b, so that the braking torque so increased is then received at the two locations situated on the rotation entrance side and the rotation exit side of the rotor. Additionally, when the braking torque is increased further, an outer circumferential surface of the sliding sleeve 6b on the rotation exit side of the rotor is brought into contact with the lug portion of the outer brake pad 3a, so that the braking torque is received at the three points. By adopting this configuration, even when the outer bridge is not provided on the support 2, the distortion of the caliper 4 or the support 2 can be suppressed to as low a level as possible.

In a floating disc brake which includes a cylinder and claw portions which are reaction force receiving portions provided on a surface of a caliper which oppositely faces the cylinder, a configuration in which an outer brake pad is held by the claw portions has various known variants as shown in PTLs 4 to 7.

In disc brake apparatuses which adopt such constructions, a press fit of protruding portions in recess portions is implemented between the claw portions and a surface of the outer brake pad which oppositely faces the claw portions so as to restrict the movement of the outer brake pad in a circumferential and radial direction of a rotor to thereby ensure a held state of the outer brake pad. Specifically, a configuration is adopted in which protruding portions which are formed on a pressure plate of the outer brake pad are fitted in recess portions formed in the claw portions.

Citation List

[Patent Literature]

[PTL 1] JP-A-10-30659
[PTL 2] JP-A-2000-104764
[PTL 3] JP-A-10-26152
[PTL 4] JP-A-8-261256
[PTL 5] JP-A-8-240232
[PTL 6] JP-A-2000-97260
[PTL 7] JP-A-2000-104764

Summary of Invention

Technical Problem

In the disc brake apparatuses that have the configurations described above, in the disc brake apparatus configured as disclosed in PTL 2, since the configuration is adopted in which not only the outer bridge portion but also the rotor pass portion is eliminated, the disc brake apparatus is superior in reducing the size and weight thereof. However, with the configuration in which the braking torque generated in the outer brake pad while the vehicle is moving forwards is received only by the torque receiving portions on the rotation exit side of the rotor, distortion may be generated in the support. Additionally, with the configuration in which the support is formed asymmetrical on the rotation entrance side and the rotation exit side of the rotor, in assembling the disc brake apparatus using the support so formed to the vehicle, differently formed supports need to be used on left- and right-hand sides of the vehicle, a complex and troublesome stock control and an increase in production costs may occur.

On the other hand, the disc brake apparatus disclosed in PTL 3 adopts the configuration in which the number of torque receiving portions is increased step by step as the braking torque is increased, so that the braking torque is eventually received both at both portions of the outer brake pad which are situated on the rotation entrance side and the rotation exit side of the rotor. Because of this, the distortion generated in the caliper or the support can be suppressed to as low a level as possible, and the identically formed supports can be used on the left- and right-hand sides of the vehicle.

In the disc brake apparatus configured as disclosed in PTL 3, however, it is designed that the braking torque is received by eliminating the sliding gaps between the guide pins and the sliding sleeves. Because of this, there are concerns regarding a reduction in sliding properties of the caliper due to increased sliding resistance and a reduction in braking performance of the disc brake apparatus associated with the reduced sliding properties.

It is therefore one advantageous aspect of the present invention to provide a disc brake apparatus which realizes a reduction in weight and production costs of the disc brake apparatus while adopting a configuration in which braking torque in an outer brake pad is directly received by a support.

In the disc brake apparatuses which are disclosed in PTLs 1, 2, the abutment portions between the brake pads and the torque receiving portions are located further radially inwards of the rotor than an outer edge of the rotor. Because of this, in order to receive braking torque in the brake pad disposed on the outer side of the rotor (the outer brake pad), it is necessary that the support extends over the rotor and that the torque receiving portions are provided in locations which are situated further radially inwards than the outer edge of the rotor.

Because of this, when looking at the disc brake apparatus as a whole, occupying a large portion of the disc brake apparatus, the support becomes large in size and heavy in weight. In the disc brake apparatus disclosed in PTL 2, the support is formed asymmetric at the rotor rotation entrance side and the rotor rotation exit side thereof with the torque receiving portion disposed only at the rotor rotation exit side of the support on the outer side of the rotor. Thus, due to the reason described above, there still remain concerns that the size and weight of the support are increased.

On the other hand, in the disc brake apparatus disclosed in PTL 3, the configuration is adopted in which the support is disposed only on the inner side of the rotor and braking torque in the outer brake pad is received by the slide sleeves. Because of this, the disc brake apparatus of PTL 3 is free from the problems inherent in the disc brake apparatuses disclosed in PTLs 1, 2.

However, in the configuration disclosed in PTL 3, when the slide sleeves having a circular sectional shape and an abutment surface of the outer brake pad which is formed into a flat surface are brought into abutment with each other, stress is concentrated on part of the abutment surface to thereby deform the surface. In addition, although the outer brake pad is kept held by protruding portions on the outer brake pad being loosely fitted in recess portions (through holes) provided in claw portions of the caliper, the outer brake pad is allowed to be shifted in the circumferential direction of the rotor due to gaps defined between the recess portions and the protruding portions, the abutment of the outer brake pad with the slide sleeves being thereby ensured. However, since the gaps exist between the recess portions and the protruding portions, there is caused a problem that the outer brake pad oscillates largely also in the radial direction of the rotor, to thereby be brought into contact with other constituent elements, generating noise (rattling noise, squeal noise).

It is therefore another advantageous aspect of the present invention to provide a brake pad that can contribute to the realization of a reduction in size and weight of a disc brake apparatus as a whole and which can suppress rattling noise and squeal noise, compared with a conventional disc brake apparatus brake pad.

Means for Solving the Problem

According to an advantageous aspect of the invention, there is provided a disc brake apparatus, comprising:

a support;
a caliper, held to the support via a guide pin so as to slide in an axial direction of a rotor, and including a claw portion; and
an outer brake pad loosely fitted to the claw portion of the caliper so as to be held thereto,
wherein the support includes:

a pair of inner torque receiving portions which are disposed on an inner side of the rotor, and which are respectively disposed on a rotation entrance side and a rotation exit side of the rotor to receive braking torque applied by an inner brake pad;
an inner bridge portion which connects together the pair of inner torque receiving portions;
a pair of rotor pass portions which respectively protrude from the pair of inner torque receiving portions in the axial direction of the rotor so as to over the rotor; and
a pair of outer torque receiving portions which receive braking torque applied by the outer brake pad at distal end parts of the rotor pass portions, and

wherein a width between the pair of outer torque receiving portions and a width of the outer brake pad in a circumferential direction of the rotor are determined so that a gap in the circumferential direction between the outer brake pad loosely fitted and the claw portion is larger than a gap defined between the outer brake pad and the outer torque receiving portions.

The outer torque receiving portions may have torque receiving surfaces which are formed by flat machining the rotor pass portions.

The disc brake apparatus may be configured such that: a recess portion is provided in the claw portion, and a protruding portion is provided on the outer brake pad so as to be loosely fitted to the recess portion.

The disc brake apparatus may be configured such that: the protruding portion has an elliptic shape or an oval shape viewed in the axial direction of the rotor in which a major axis is directed in the radial direction of the rotor and a minor axis is directed in the circumferential direction of the rotor, and the recess portion has a circular shape having a diameter which is longer than the major axis.

The disc brake apparatus may be configured such that: the protruding portion has a circular shape, the recess portion has an elliptic shape or an oval shape viewed in the axial direction of the rotor in which a major axis is directed in the circumferential direction of the rotor and a minor axis is directed in the circumferential direction of the rotor, and a length of the minor axis is longer than a diameter of the circular shape.

According to the disc brake apparatus, cutting work that is performed at the time of production can be simplified. Specifically, broaching work using a special tool is made unnecessary. Additionally, in disc brake apparatuses having different rotor diameters, a change in deviation of the torque receiving surfaces in the radial direction of the rotor can easily be dealt with, and therefore, the commonization of brake pad shapes can be facilitated.

With this configuration adopted, the protruding portion on the outer brake pad can be formed through pressing work, and the through hole can be formed by cutting. On the other hand, when a protruding portion and a through hole are formed in an opposite way, a special cutting step of forming the protruding portion inside the claw portion is necessary.

According to the disc brake apparatus, a larger degree of freedom can be given to the movement of the outer brake pad in the circumferential direction of the rotor than a degree of freedom given to the movement of the outer brake pad in the radial direction of the rotor while controlling the movement of the outer brake pad in the radial direction of the rotor.

According to the disc brake apparatus, as with the configuration described above, a larger degree of freedom can be given to the movement of the outer brake pad in the circumferential direction than a degree of freedom given to the movement of the outer brake pad in the radial direction of the rotor while controlling the movement of the outer brake pad in the radial direction of the rotor.

According to another advantageous aspect of the invention, there is provided a disc brake apparatus, comprising:

a caliper including a caliper main body with a cylinder and a claw portion which is provided in an opposite position to the caliper main body; and
an outer brake pad loosely fitted to the claw portion so as to be held thereto,
wherein the claw portion includes flange portions which are respectively disposed on a rotation entrance side and a rotation exit side of a rotor with respect to a center position of the caliper, and
loosely fitting portions in which a pair of protruding portions provided on the outer brake pad are loosely fitted are provided in the flange portions respectively.

Each of the flange portions may have a step portion between a surface of the claw portion which oppositely faces the outer brake pad and itself so as to define a gap between the outer brake pad and itself.

The disc brake apparatus may be configured such that: a pair of claw portions like the claw portion are provided on the rotation entrance side and the rotation exit side of the rotor with respect to the center position of the caliper so as to hold oppositely facing positions of the cylinder therebetween, and one of the flange portions is provided at a rotation entrance side of the claw portion which is provided on the rotation entrance side of the rotor, and the other of the flange portions is provided at a rotation exit side of the claw portion which is provided on the rotation exit side of the rotor.

The disc brake apparatus may be configured such that: one of the loosely fitting portions in one of the flange portions which is provided on the rotation entrance side of the rotor is provided further towards the rotation entrance side than an outer wall of the cylinder, and the other of the loosely fitting portions in the other of the flange portion which is provided on the rotation exit side of the rotor is provided further towards the rotation exit side than the outer wall of the cylinder.

A thickness of the flange portion in an axial direction of the rotor may be thinner than a thickness of the claw portion in the axial direction of the rotor.

Positions of the loosely fitting portions with respect to a radial direction of the rotor may be disposed inner side of the rotor in the radial direction of the rotor than a position of the cylinder with respect to the radial direction of the rotor.

According to the disc brake apparatus, portions of the surface of the outer brake pad which surround the protruding portions and of which the flatness is deteriorated due to the formation of the protruding portions do not contact the flange portions where the loosely fitting portions are provided, and the pressing of the outer brake pad is carried out only by the claw portion. Because of this, noise and unbalanced pressing of the outer brake pad are suppressed that would otherwise occur in association with an unstable contact. This advantage obviates the necessity of a severe control of the flatness of the portions of the surface which surround the protruding portions, thereby making it possible to suppress an increase in production costs.

According to the disc brake apparatus, a distance between the loosely fitting portions can be made longer than when the loosely fitting portions are provided in the claw portions.

According to the disc brake apparatus, it becomes possible to bore the loosely fitting portions from the caliper body side, that is, from an inner side of the rotor. Consequently, the productivity can be enhanced, and the machining cost can be reduced.

According to the disc brake apparatus, the increase in weight of the caliper can be suppressed that would otherwise occur in association with adopting the flange portions.

By adopting this configuration, compared with the configuration in which the loosely fitting portions are provided directly in the claw portions, the disadvantage of reduced rigidity can be suppressed.

According to another advantageous aspect of the invention, there is provided a brake pad, configured to be held by a caliper which includes a claw portion formed with a plurality of loosely fitting portions in an inner wall thereof, wherein a length of the loosely fitting portions in a circumferential direction of a rotor is equal to or longer than a length of the loosely fitting portions in a radial direction of the rotor, and configured to transmit braking torque to a support which holds the caliper, the brake pad comprising:

a plurality of protruding portions which are respectively loosely fitted in the loosely fitting portions ,
wherein a shape of each of the protruding portions viewed from the axial direction of the rotor has a major axis which is directed in the radial direction of the rotor and a minor axis which is directed in the circumferential direction of the rotor.

The brake pad may be configured such that: the loosely fitting portions are provided two positions along the circumferential direction of the rotor, and a distance between the two loosely fitting portions is determined so that a distance between the plurality of or two protruding portions loosely fitted in the loosely fitting portions is shorter than the distance between the two protruding portions.

The brake pad may be configured such that: the loosely fitting portions are provided two positions along the circumferential direction of the rotor, and a distance between the two loosely fitting portions is determined so that a distance between the plurality of or two protruding portions loosely fitted in the loosely fitting portions is equal to the distance between the two protruding portions.

The brake pad may be configured such that: the loosely fitting portions are provided two positions along the circumferential direction of the rotor, and a distance between the two loosely fitting portions is determined so that a distance between the plurality of or two protruding portions loosely fitted in the loosely fitting portions is longer than the distance between the two protruding portions.

The shape of each of the protruding portions may be one of an oval shape, an elliptic shape, a parallelogram shape and a polygonal shape.

The brake pad may be configured such that: the shape of each of the protruding portions is one of a parallelogram shape and a polygonal shape, and an arc portion is provided at each apex of the shape.

According to the brake pad, when the relationship of L1<L2 is satisfied, the protruding portion which is positioned on a rotation exit side of the rotor is brought into contact with a rotor rotation exit side inner circumferential wall of the corresponding loosely fitting portion before the other protruding portion is brought into contact with the corresponding loosely fitting portion, generating thereby a so-called pushing anchor state. Thereafter, when the braking torque is increased, a slight distortion is generated in the caliper, whereby the brake pad is shifted towards the rotation exit side of the rotor. By this shift of the brake pad, the protruding portion that is positioned on a rotation entrance side of the rotor is also brought into contact with a rotor rotation exit side circumferential wall of the corresponding loosely fitting portion, generating thereby pushing and drawing anchor states.

In addition, when the relationship of L1=L2 is satisfied, the protruding portion that is positioned on the rotation entrance side of the rotor and the protruding portion which is positioned on the rotation exit side of the rotor are simultaneously brought into contact with the rotor rotation exit side inner circumferential walls of the loosely fitting portions. This simultaneously generates pushing and drawing anchor states.

Further, when the relationship of L1>L2 is satisfied, the protruding portion that is positioned on the rotation entrance side of the rotor is brought into contact with the rotor rotation exit side inner circumferential wall of the loosely fitting portion before the other protruding portion is brought into contact with the corresponding loosely fitting portion, generating thereby a so-called drawing anchor state. Thereafter, when the braking torque is increased, not only is a distortion generated in the caliper, but also the brake pad is shifted towards the rotation exit side of the rotor. Then, the protruding portion which is positioned on the rotation exit side of the rotor is also brought into contact with the rotor rotation exit side inner circumferential wall of the loosely fitting portion, generating thereby drawing and pushing (pushing and drawing) anchor states.

In the event that the brake pad is formed in this way, the shape of the protruding portion resulting when it is projected from the front is allowed to have a major axis and a minor axis.

According to the brake pad, when the protruding portion receives the braking torque to thereby be pressed against the inner circumferential wall of the loosely fitting portion, concentrated stress applied to the corner portions can be mitigated. This can suppress the deformation of the members which are brought into abutment with each other.

According to another advantageous aspect of the invention, there is provided an outer brake pad for a floating disc brake apparatus, configured to be held by a caliper which includes a claw portion formed with a plurality of loosely fitting portions in an inner wall thereof , wherein a length of each of the loosely fitting portions in a circumferential direction of a rotor is equal to or longer than a length of each of the loosely fitting portions a radial direction of the rotor, and configured to transmit braking torque to a support which holds the caliper, the outer brake pad comprising:

a plurality of protruding portions which are respectively loosely fitted in the loosely fitting portions,
wherein a shape of each of the protruding portions viewed from an axial direction of the rotor has a major axis which is directed in the radial direction of the rotor and a minor axis which is directed in the circumferential direction of the rotor, and
wherein an abutment portion of the outer brake pad configured to come in contact with the support is provided at outer side of the rotor in the radial direction of the rotor than a peripheral edge of the rotor.

The abutment portion may be configured to surface contact a torque receiving surface of the support.

According to the outer brake pad, when the brake pad contacts the support, that is, when the braking torque is transmitted from the former to the latter, there is caused no such situation that stress is concentrated on the abutment portion, thereby making it possible to suppress the deformation or wear of the abutment portion.

Brief Description of Drawings

Fig. 1 is a front view of a disc brake apparatus according to an embodiment.
Fig. 2 is a right-hand side sectional view of the disc brake apparatus according to the embodiment.
Fig. 3 is a partially sectional plan view of the disc brake apparatus according to the embodiment.
Fig. 4 is a rear view of the disc brake apparatus according to the embodiment.
Fig. 5 is a perspective view of the disc brake apparatus according to the embodiment as seen obliquely from therebelow on a right-hand side thereof.
Fig. 6 is a perspective view of the disc brake apparatus according to the embodiment as seen obliquely from thereabove on the right-hand side thereof.
Fig. 7 is a front view of a support of the disc brake apparatus according to the embodiment.
Fig. 8 is a right-hand side view of the support of the disc brake apparatus according to the embodiment.
Fig. 9 is a plan view of the support of the disc brake apparatus according to the embodiment.
Fig. 10 is a rear view of the support of the disc brake apparatus according to the embodiment.
Fig. 11 is a front view of a caliper of the disc brake apparatus according to the embodiment.
Fig. 12 is a right-hand side view of the caliper of the disc brake apparatus according to the embodiment.
Fig. 13 is a rear view of the caliper of the disc brake apparatus according to the embodiment.
Fig. 14 is a front view of an inner brake pad.
Fig. 15 is a right-hand side view of the inner brake pad.
Fig. 16 is a rear view of the inner brake pad.
Fig. 17 is a front view of an outer brake pad.
Fig. 18 is a sectional view of the outer brake pad taken along the line A-A.
Fig. 19 is a sectional view of the outer brake pad taken along the line B-B.
Fig. 20 is a rear view of the outer brake pad.
Fig. 21 is a perspective view of the outer brake pad to which a butterfly spring is assembled.
Fig. 22 is a diagram which illustrates a relationship between the support, the outer brake pad and the caliper with respect the magnitude of gaps defined therebetween.
Fig. 23 is a rear view showing the configuration of the outer brake pad where protruding portions are formed into an oval shape.
Fig. 24 is a front view showing an example of a disc brake apparatus in which through holes are formed into an elliptic shape, while protruding portions are formed into a circular shape.
Fig. 25 is a front view showing an example of a disc brake apparatus in which through holes are formed in bodies of claw portions.
Fig. 26 is a partially sectional plan view showing the configuration of a conventional disc brake apparatus in which a support has an outer bridge.
Fig. 27 is a partially sectional plan view showing the configuration of a conventional disc brake apparatus in which a support is formed asymmetrical.

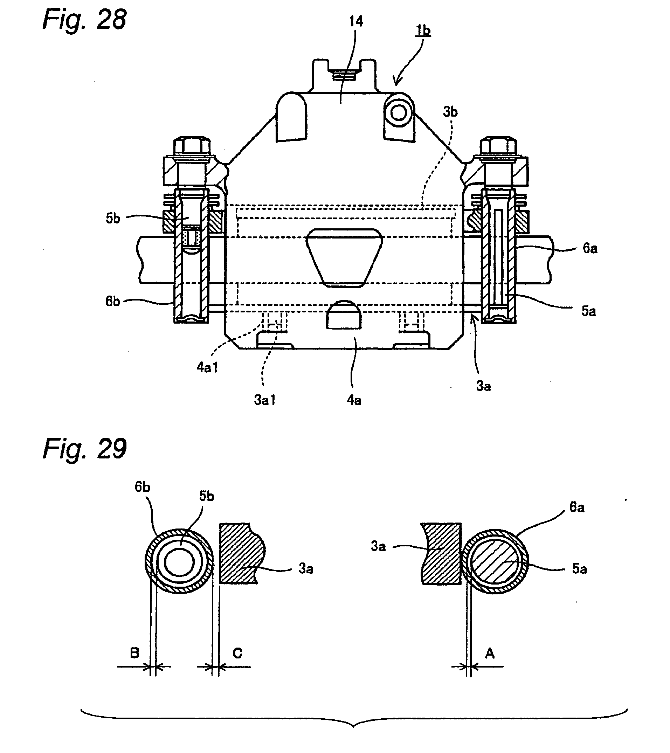

Fig. 28 is a partially sectional plan view showing the configuration of a conventional disc brake apparatus in which an outer brake pad is fitted to a caliper and braking torque is inputted into a support via the caliper and guide pins.
Fig. 29 is a diagram which illustrates a relationship between the guide pins and the guide sleeves, as well as the outer brake pad of the conventional disc brake apparatus shown in Fig. 28 with respect to the magnitude of gaps defined therebetween.
Fig. 30 is a diagram illustrating rotational angles of the protruding portions which differ depending upon positions of loosely fitting portions which are recess portions or through holes.

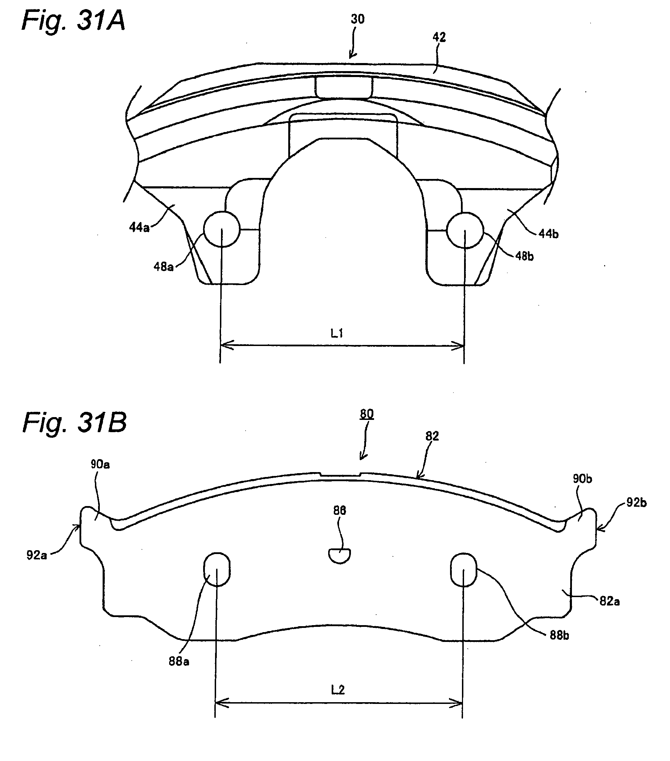

Figs. 31 A and 31 B show diagrams that illustrate a relationship between a pitch L1 between loosely fitting portions of a caliper and a pitch L2 between protruding portions on the brake pad.
Fig. 32 is a diagram showing an example in which a protruding portion is formed into a rectangular shape having arc portions in respective corners when projected from the front.
Fig. 33 is a diagram showing an example in which a protruding portion is formed into a hexagonal shape when projected from the front.
Fig. 34 is a diagram showing an example in which a protruding portion is formed into a parallelogram in which a major axis is disposed in a radial direction of a rotor when projected from the front.
Fig. 35 is a diagram showing an example in which a protruding portion is formed into an oval shape when projected from the front.
Fig. 36 is a diagram that illustrates an example in which the brake pad is applied to a disc brake apparatus where a through hole is formed into an elliptic shape.

Fig. 37 is a diagram that illustrates an example in which the brake pad is applied to a disc brake apparatus where a through is formed into a rectangular shape.

Fig. 38 is a diagram that illustrates an example in which the brake pad is applied to a disc brake apparatus where through holes are formed in portions such as flange portions which constitute part of claw portions.

Description of Embodiments

Hereinafter, disc brake apparatuses according to embodiments of the invention will be described in detail by reference to the drawings.

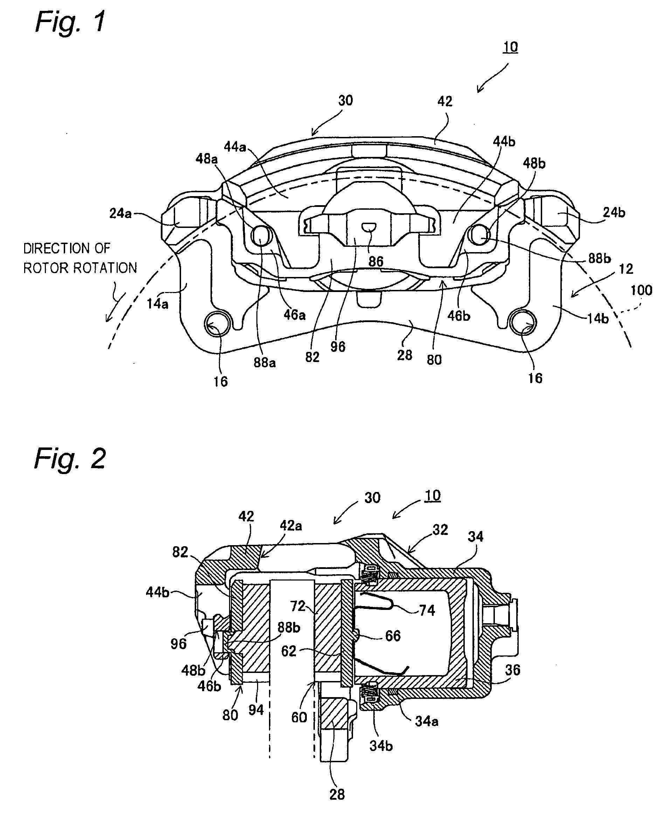

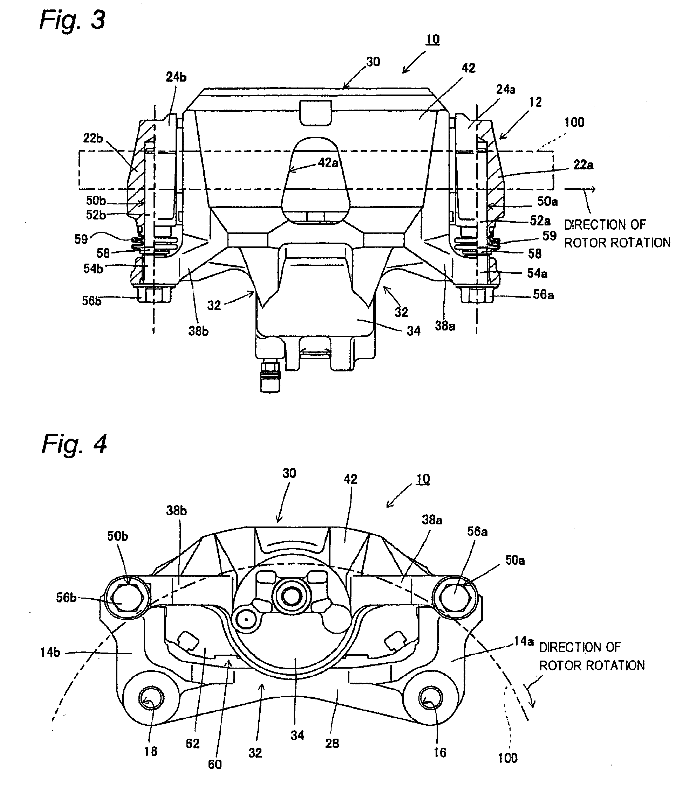

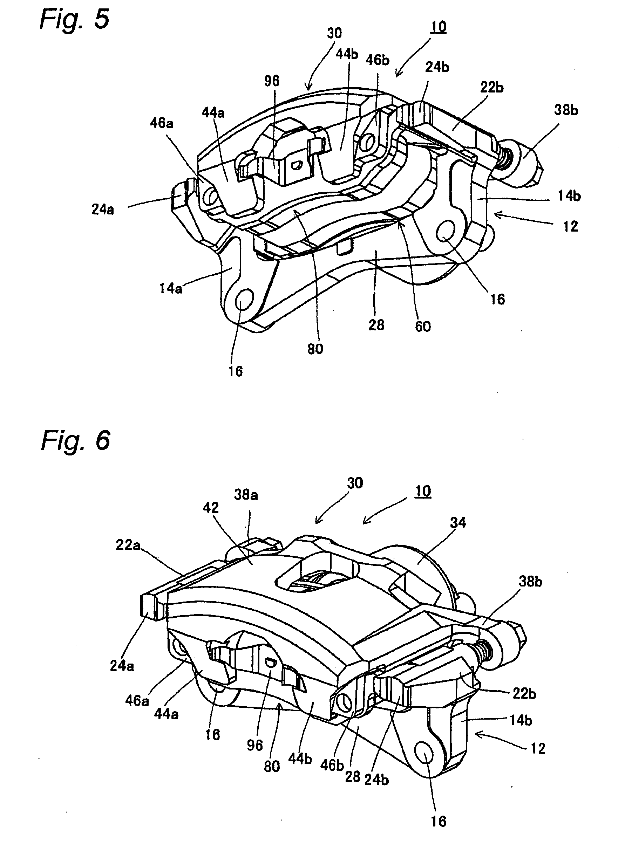

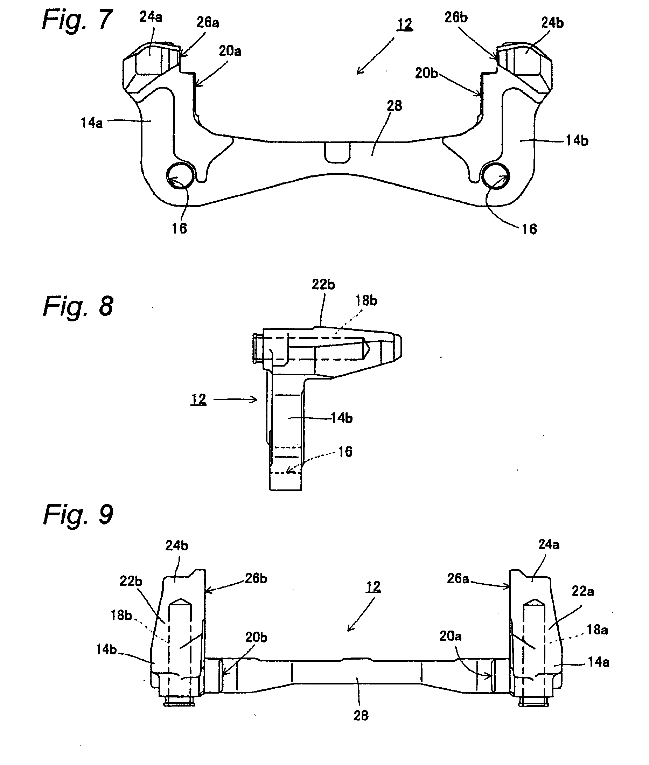

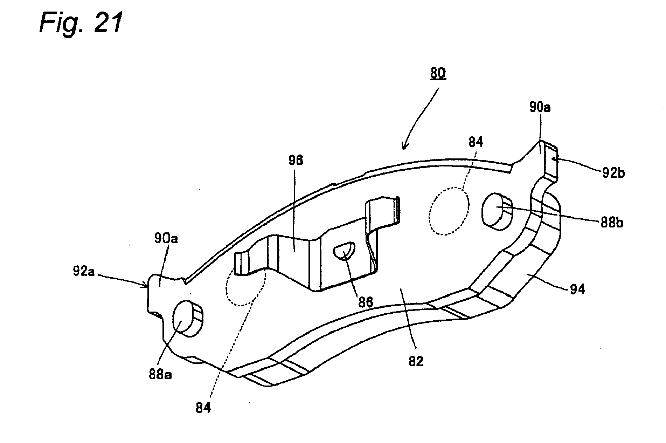

Firstly, referring to Figs. 1 to 22, a disc brake apparatus according to a first embodiment will be described. Here, Fig. 1 is a front view of a disc brake apparatus according to this embodiment. Additionally, Fig. 2 is a right-hand side sectional view of the disc brake apparatus according to the embodiment. Fig. 3 is a partially sectional plan view of the disc brake apparatus according to the embodiment. Fig. 4 is a rear view of the disc brake apparatus according to the embodiment. Fig. 5 is a perspective view of the disc brake apparatus according to the embodiment as seen obliquely from therebelow on a right-hand side thereof. Fig. 6 is a perspective view of the disc brake apparatus according to the embodiment as seen obliquely from thereabove on the right-hand side thereof. In addition, Figs. 7 to 22 are diagrams showing individual constituent elements independently which make up the disc brake apparatus according to the embodiment, and the constituent elements will be described in detail later.

A disc brake apparatus 10 according to this embodiment includes basically a support 12 and a caliper 30, an inner brake pad 60, an outer brake pad 80 and a rotor 100. Here, although not shown entirely, the rotor 100 is a ring-shaped friction plate which follows a wheel (not shown) to rotate together therewith. With frictional surfaces of the rotor 100 clamped or pinched by the inner brake pad 60, which will be described in detail later, and the outer brake pad 80, frictional force is generated on sliding surfaces to thereby suppress the rotation of the wheel, whereby braking force is obtained.

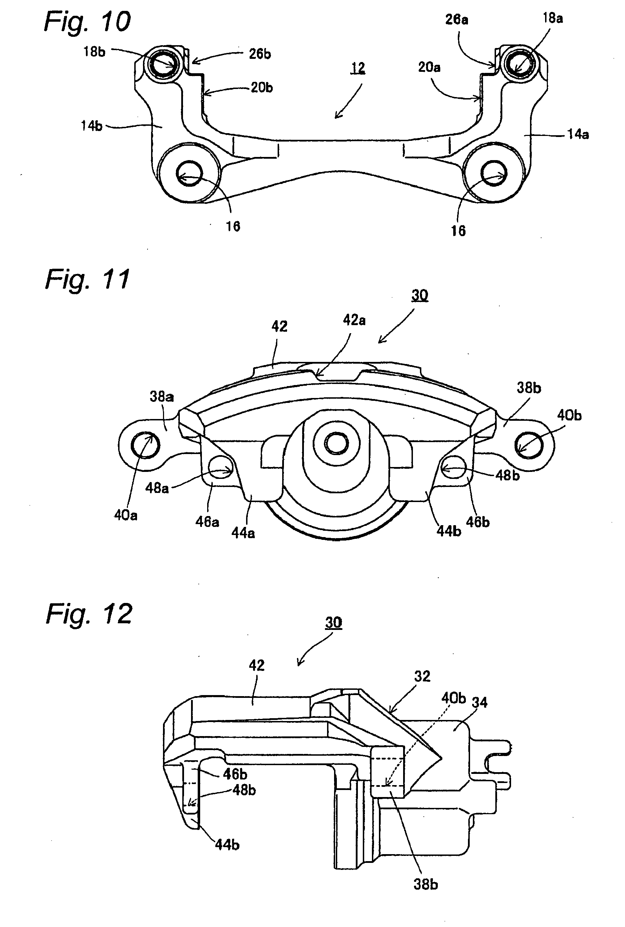

As shown in Figs. 7 to 10, the support 12 includes basically a pair of inner torque receiving portions 14a, 14b, an inner bridge portion 28, rotor pass portions 22a, 22b, and a pair of outer torque receiving portions 24a, 24b. Additionally, in the drawings, Figs. 7 to 10 showing the support, Fig. 7 is a front view, Fig. 8 is a right-hand side view, Fig. 9 is a plan view, and Fig. 10 is a rear view thereof.

The inner torque receiving portions 14a, 14b and the outer torque receiving portions 24a, 24b both have a function to receive braking torque generated in the inner brake pad 60, which will be described in detail later, or the outer brake pad 80 to thereby generate, in turn, braking force.

The inner torque receiving portions 14a, 14b are disposed in the support 12 on a rotation exit side and a rotation entrance side of the rotor, respectively, along a rotational circumferential surface of the rotor. The inner bridge portion 28 is provided between the inner torque receiving portion 14b which is disposed on the rotation entrance side of the rotor and the inner torque receiving portion 14a which is disposed on the rotation exit side of the rotor so as to connect them together. This inner bridge portion 28 is formed substantially into a U-shape when projected from the front thereof (for example, refer to Fig. 7).

Mounting holes 16, guide holes 18a, 18b and torque receiving surfaces 20a, 20b are formed in and on the inner torque receiving portions 14a, 14b. The mounting holes 16 are holes for fixing the support 12 to the vehicle. In the case of this embodiment, the mounting holes 16 are provided in lower portions of the pair of inner torque receiving portions 14a, 14b. By providing the plurality of mounting holes 16, the rotation of the support 12 which is fixed in place can be prevented. Additionally, threads are formed in the mounting holes 16, and therefore, the mounting holes 16 are formed into internally threaded holes.

The guide holes 18a, 18b are sac holes into which guide pins 50a, 50b can be inserted, and the caliper 30, which will be described in detail later, is allowed to slide in the direction of a rotor axis by the guide pins 50a, 50b which are so inserted. The guide holes 18a, 18b are disposed in locations which are situated on an outer circumferential side of the rotor 100 in such a state that the disc brake apparatus 10 is assembled to the wheel. The guide holes 18a, 18b are opened deep into the rotor pass portions 22a, 22b which are disposed on the outer circumferential side of the rotor 100, whereby not only can the adherence of dust to the guide pins 50a, 50b be prevented, but also the sliding amount of the guide pins 50a, 50b can be ensured.

The torque receiving surfaces 20a, 20b are machined surfaces which are formed on oppositely facing surfaces of the inner torque receiving portions 14a, 14b which are disposed in the support 12 on the rotation exit side and the rotation entrance side of the rotor 100. In the case of this embodiment, the torque receiving surfaces 20a, 20b of the inner torque receiving portions 14a, 14b are provided below the locations where the guide holes 18a, 18b are formed, and step portions are formed above the torque receiving surfaces 20a, 20b as relief surfaces for the inner brake pad 60. By causing the positions where the torque receiving surfaces 20a, 20b are formed to approach connecting portions between the inner torque receiving portions 14a, 14b and the inner bridge portion 28, the distortion of the support 12 cab be suppressed when braking torque is applied. Additionally, by providing the torque receiving surfaces 20a, 20b only on the oppositely facing surfaces on the rotation exit side and the rotation entrance side of the rotor in the support 12, the machined surfaces are limited to those oppositely facing surfaces.

The outer torque receiving portions 24a, 24b have torque receiving surfaces 26a, 26b, respectively. The outer torque receiving portions 24a, 24b of the support 12 according to this embodiment are made up of extended portions at distal ends of the rotor pass portions 22a, 22b where the guide holes 18a, 18b are formed. By simplifying the configuration of the outer torque receiving portions 24a, 24b, a reduction in size and weight of the support 12 can be realized.

The torque receiving surfaces 26a, 26b of the outer torque receiving portions 24a, 24b are formed by surface cutting (flat machining) oppositely facing surfaces of the rotor pass portions 22a, 22b making up the outer torque receiving portions 24a, 24b which are situated on the rotation exit side and the rotation entrance side of the rotor. By forming the torque receiving surfaces 26a, 26b in this way, the surfaces which need to be machined are limited to only surfaces which are brought into contact with the outer brake pad 80. Because of this, even when the radius of the rotor 100 is changed, that is, a rotor 100 having a different radius is used, contact locations between the torque receiving surfaces 26a, 26b and abutment surfaces 92a, 92b of the outer brake pad 80 only deviate in the radial direction of the rotor. Therefore, when the disc brake apparatus is attempted to be applied to various models, the commonization of pad shapes can be facilitated.

In the support 12 that is configured in the way described above, the inner torque receiving portions 14a, 14b and the outer torque portions 24a, 24b are each formed on the single machined surface through cutting. Because of this, the required machining can easily be attained by a general-purpose cutting machine, and hence, the conventional slotting machining such as broaching using a special machining tool or milling using a milling cutter becomes unnecessary, whereby the machinability is enhanced, and a reduction in machining time and cost can be realized.

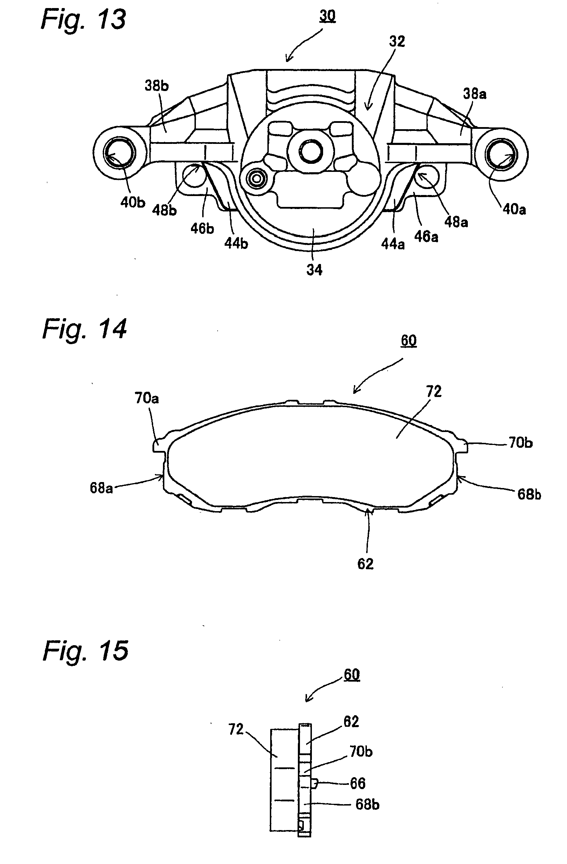

As shown in Figs. 11 to 13, the caliper 30 includes basically a caliper body 32, claw portions 44a, 44b and a bridge portion 42. In the drawings, Fig. 11 is a front view of the caliper, Fig. 12 is a right-hand side view of the caliper, and Fig. 13 is a rear view of the caliper.

The caliper body 32 is disposed on an inner side of the rotor 100 and includes a cylinder 34 and arm portions 38a, 38b. As shown in Fig. 2, in the cylinder 34, grooves for an oil seal 34a and a dust seal 34b are formed, and a cup-shaped piston 36 is disposed. It should be noted that the piston 36 is disposed with a cup bottom portion oriented towards a bottom portion of the cylinder 34. By adopting this configuration, the piston 36 is pushed out towards the rotor 100 as a hydraulic fluid is caused to flow into the cylinder 34. It is desirable that the cylinder 34 is disposed in a position where the cylinder 34 oppositely faces a sliding surface of the rotor 100 in such a state that the caliper 30 is assembled to the support 12. This is because a loss or deviation of the force which is to be transmitted to the inner brake pad 60 which is pressed against the rotor 100 is made difficult to occur.

The caliper 30 is assembled to the support 12 based on the arm portions 38a, 38b, and the arm portions 38a, 38b are provided to extend from an outer wall of the cylinder 34 as a starting point towards a rotation exit side and a rotation entrance side the rotor 100, respectively, so as to make a pair. Internally threaded holes 40a, 40b are formed in distal end portions of the arm portions 38a, 38b, respectively, and the guide pins 50a, 50b, which will be described in detail later, are screwed into the internally threaded holes 40a, 40b, respectively. By the guide pins 50a, 50b being inserted into the guide holes 18a, 18b, respectively, the caliper 30 is allowed to slide in an axial direction thereof. Therefore, a center-to-center pitch of the guide holes 18a, 18b in the support 12 is made to coincide with a center-to-center pitch of the internally threaded holes 40a, 40b in the arm portions 38a, 38b.

The guide pins 50a, 50b are pins which have sliding portions 52a, 52b, fixed portions 54a, 54b and bolt heads 56a, 56b (refer to Fig. 3). The sliding portions 52a, 52b have a diameter which is slightly smaller than a diameter of the guide holes 18a, 18b in the support 12, and a length of the sliding portions 52a, 52b may be at least equal to or larger than a sliding distance of the caliper 30. By adopting this configuration, the guide pins 50a, 50b can be inserted into and slide within the guide holes 18a, 18b, respectively. The fixed portions 54a, 54b have external threads which can screw in the internally threaded holes 40a, 40b, respectively, which are provided in the arm portions 38a, 38b. By adopting this configuration, when the guide pins 50a, 50b are tightened via the bolt heads 56a, 56b, the guide pins 50a, 50b can be fixed to the arm portions 38a, 38b. In view of the assembling construction, needless to say, the diameter of the sliding portions 52a, 52b is made smaller than that of the fixed portions 54a, 54b. In this embodiment, constricted portions 58 are formed in boundary positions between the sliding portions 52a, 52b and the fixed portions 54a, 54b, and boots 59 are provided so as to cover portions defined between entrances of the guide holes 18a, 18b and the constricted portions 58 in an assembled state. The boots 59 are corrugated covering members that are made of an elastic member such as a rubber and can stretch and contract in the axial direction of the rotor 100 as the guide pins 50a, 50b slide, whereby the boots 59 perform to prevent the adhesion of dust to the sliding portions 52a, 52b which enter and exit from the guide holes 18a, 18b.

The claw portions 44a, 44b are disposed on an outer side of the rotor 100 and constitute a pair of reaction force receiving portions which are provided in the caliper 30 on the rotation exit side and the rotation entrance side of the rotor 100 so as to hold oppositely facing positions on the cylinder 34 in the caliper body 32 therebetween. Flange portions 46b, 46a are formed, respectively, on the claw portion 44b which is disposed on the rotation entrance side of the rotor 100 so as to protrude towards the rotation entrance side and the claw portion 44a which is disposed on the rotation exit side of the rotor 100 so as to protrude towards the rotation exit side. Through holes 48a, 48b are provided in the flange portions 46a, 46b, respectively, and protruding portions 88a, 88b on the outer brake pad 80, which will be described in detail later, are loosely fitted in the through holes 48a, 48b, respectively. By loosely fitting the protruding portions 88a, 88b in the through holes 48a, 48b, respectively, the protruding portions 88a, 88b can function not only to hold the outer brake pad 80 but also to prevent the rotation of the outer brake pad 80.

As is seen from Figs. 11 and 13, the flange portions 46a, 46b are provided in positions where the flange portions 46a, 46b avoid the cylinder 34 in the caliper body 32 when they are projected, that is, in positions which are not superposed on the position where the cylinder 34 is formed. By adopting this configuration, the through holes 48a, 48b can easily be formed from the side of the caliper body 32. According to the configuration in which the through holes 48a, 48b are formed from sides of the flange portions 46a, 46b which oppositely face the caliper body 32, there will be no such situation that burrs are produced on surfaces of the flange portions 46a, 46b which oppositely face the rotor when the through holes are formed.

Additionally, by adopting the configuration in which the flange portions 46a, 46b are provided at a rotation exit side and at a rotation entrance side of the rotor rotation exit side claw portion 44a and the rotor rotation entrance side claw portion 44b, respectively, and the through holes 48a, 48b (including recess portions) are provided in the flange portions 46a, 46b, respectively, a pitch between the through holes 48a, 48b (including the recess portions) can be made long, compared with a configuration in which through holes and recess portions are provided directly in the claw portions 44a, 44b. By adopting the configuration, even when a backlash in a radial direction of the rotor 100 that is defined between the protruding portions 88a, 88b on the outer brake pad 80 and the through holes 48a, 48b is common on these two configurations, according to the configuration of this embodiment, a backlash in a direction in which the outer brake pad 80 is rotated can be made smaller by such an extent that the distance from the center of the caliper 30 to the through holes 48a, 48b according to the configuration of this embodiment is longer than the same distance according to the configuration of the comparison example.

The bridge portion 42 is a connecting portion which extends over an outer circumference of the rotor 100 so as to connect together the caliper body 32 and the claw portions 44a, 44b. An opening portion 42a is provided in a center of the bridge portion 42, whereby the caliper 30 having a so-called open back construction is made up. The opening portion 42a functions not only to radiate friction heat that is generated when the brake is applied but also to visually realize the degree of wear of a lining of the brake pad, which will be described in detail later.

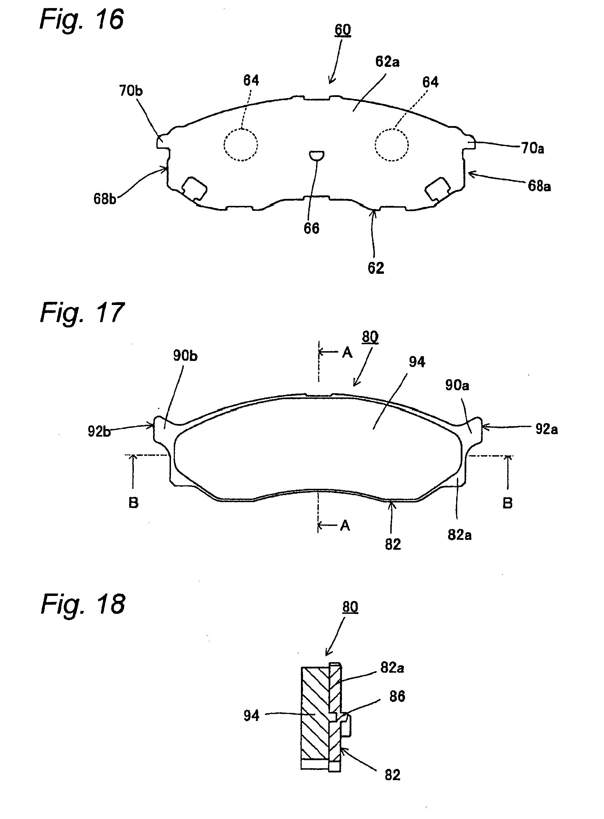

The inner brake pad 60 is a brake pad which is held to the piston 36 in the caliper body 32. As shown in Figs. 14 to 16, the inner brake pad 60 includes basically a pressure plate 62 and a lining 72. In the drawings, Fig. 14 shows a front view of the inner brake pad, Fig. 15 shows a right-hand side view of the inner brake pad, and Fig. 16 shows a rear view of the inner brake pad.

The pressure plate 62 of the inner brake pad 60 has a plate body 62a and lug portions 70a, 70b. When projected from the front, the plate body 62a has an arc-like shape which follows the shape of a sliding surface of the rotor 100, and a plurality of (two in this embodiment) depressed grooves 64 are provided in a lining affixing surface of the plate body 62a so as to prevent the deviation of the lining 72. On the other hand, a protruding spring mounting portion 66 to which a mounting spring 74 (refer to Fig. 2) is fixed is formed on an opposite surface (hereinafter, referred to as a rear surface) to the lining affixing surface (hereinafter, referred to as a front surface) of the plate body 62a. It should be noted that the spring mounting portion 66 may be formed through embossing. Abutment surfaces 68a, 68b are formed on the plate body 62a at a rotor rotation exit side and a rotor rotation entrance side thereof, respectively. The abutment surfaces 68a, 68b have a function to transmit braking torque to the support 12 by being brought into contact with the torque receiving surfaces 20a, 20b which are formed on the support 12, respectively. The abutment surfaces 68a, 68b of the inner brake pad 60 are provided lower than the position of a center of gravity of the brake pad so that the abutment surfaces 68a, 68b are allowed to oppositely face the torque receiving surfaces 20a, 20b of the inner torque receiving portions 14a, 14b.

The lug portions 70a, 70b are provided at upper portions of the abutment surfaces 68a, 68b of the plate body 62a so as to protrude towards the rotation exit side and the rotation entrance side of the rotor 100, respectively. The lug portions 70a, 70b are formed so as to be caught on the steps which are defined between the torque receiving surfaces 20a, 20b of the support 12 and the rotor passes 22a, 22b which have the guide holes 18a, 18b.

The lining 72 is a friction member which contacts the sliding surface of the rotor 100. When projected from the front, the lining 72 has a fan shape which follows the sliding surface of the rotor 100. A rotor facing surface of the lining 72 is formed flat, and a groove (not shown) is formed as required thereon for the purpose of discharging dust or dissipating heat. A surface of the lining 72 which oppositely faces the plate body 62a has protruding portions which are formed thereon so as to fit in the corresponding depressed grooves 64 which are formed in the plate body 62a. It should be noted that the lining 72 and the plate body 62a may be joined together with a heat resistant adhesive.

As shown in Fig. 2, the inner brake pad 60 which is configured basically in this way is held in the caliper 30 by mounting the mounting spring 74 on the spring mounting portion 66 which is formed on the plate body 62a and biasing the mounting spring 74 to an inner wall of a recess portion in the cup-shaped piston 36.

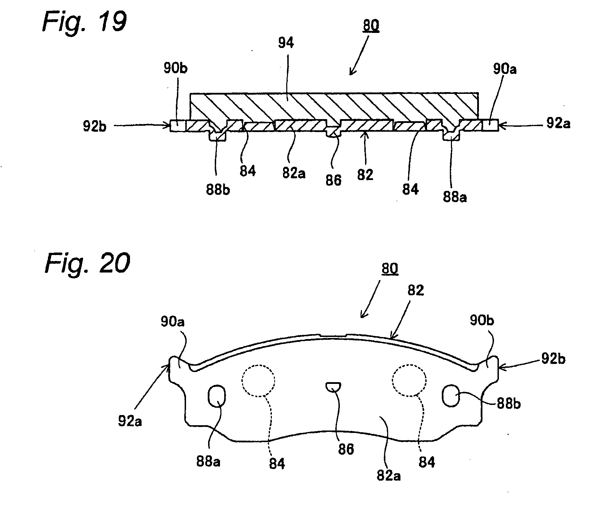

The outer brake pad 80 is a brake pad which is held by a butterfly spring 96 based on the through holes 48a, 48b which are formed in the claw portions 44a, 44b (the flange portions 46a, 46b of the claw portions 44a, 44b). As with the inner brake pad 60, the outer brake pad 80 also includes basically a pressure plate 82 and a lining 94. Figs. 17 to 20 are drawings showing the configuration of the outer brake pad. Fig. 17 shows a front view of the outer brake pad, Fig. 18 shows a sectional view taken along the line A-A in Fig. 17, Fig. 19 shows a sectional view taken along the line B-B in Fig. 17, and Fig. 20 shows a rear view of the outer brake pad.

The pressure plate 82 includes a plate body 82a and lug portions 90a, 90b. As with the inner brake pad 60, depressed grooves 84 for affixing the lining 94 are provided in a lining affixing surface (hereinafter, referred to as a front surface) of the plate body 82a. On the other hand, a protruding spring mounting portion 86 to which the butterfly spring 96 for holding the outer brake pad 80 is fixed and the protruding portions 88a, 88b which are loosely fitted in the through holes 48a, 48b which are formed in the flange portions 46a, 46b of the claw portions 44a, 44b are formed on a surface (hereinafter, referred to as a rear surface) of the plate body 82a which is opposite to the lining affixing surface.

In the outer brake pad 80 according to this embodiment, the protruding portions 88a, 88b are formed into an elliptic shape. Specifically, the protruding portions 88a, 88b each have an elliptic shape in which an axis which is disposed along the radial direction of the rotor 100 is referred to as a major axis and an axis which is disposed along a circumferential direction of the rotor 100 is referred to as a minor axis. By adopting this configuration, in a relationship with the circular through holes 48a, 48b which are formed in the flange portions 46a, 46b, a gap defined in the radial direction of the rotor 100 and a gap defined in the circumferential direction thereof are made to differ from each other. In the case of the protruding portions 88a, 88b according to the embodiment, the gap defined in the circumferential direction of the rotor 100 becomes larger than the gap defined in the radial direction thereof. It should be noted that the spring mounting portion 86 and the protruding portions 88a, 88b can be formed through embossing. When the spring mounting portion 86 and the protruding portions 88a, 88b are formed through embossing, recess portions are formed on the front surface in corresponding positions to the positions where the spring mounting portion 86 and the protruding portions 88a, 88b are formed.

The lug portions 90a, 90b are provided to extend from a rotor rotation exit side end portion and a rotor rotation entrance side end portion of the plate body 82a towards the rotation exit side and the rotation entrance side of the rotor, respectively. In the outer brake pad 80, abutment surfaces 92a, 92b are formed on the lug portions 90a, 90b, respectively. Because of this, the height at which the lug portions 90a, 90b are disposed needs to match that of the torque receiving surfaces 26a, 26b of the outer torque receiving portions 24a, 24b which are formed at distal ends of the rotor pass portions 22a, 22b. Consequently, the lug portions 90a, 90b of the outer brake pad 80 are provided to extend radially outwards of the rotor 100 while being inclined, and a rotor rotation exit side end portion of the lug portion 90a and a rotor rotation entrance side end portion of the lug portion 90b are made into the abutment surfaces 92a, 92b, respectively. Because of this, the abutment surfaces 92a, 92b of the outer brake pad 80 are disposed on an outer circumferential side of the rotor 100, that is, further radially outwards than the center of the brake pad.

The outer brake pad 80 is assembled to the claw portions 44a, 44b by loosely fitting the protruding portions 88a, 88b in the through holes 48a, 48b in the flange portions 46a, 46b and biasing the outer brake pad 80 towards the claw portions 44a, 44b by making use of the butterfly spring 96. Specifically, the claw portions 44a, 44b should be placed between a rear surface of the plate body 82a of the outer brake pad 80 and the butterfly spring 96 so as to be pinched therebetween. As in this embodiment, by offsetting the pinching position of the claw portions 44a, 44b by the butterfly spring 96 and the loosely fitting position of the protruding portions 88a, 88b from each other in a planar fashion, an advantage can be obtained that the assembling properties are enhanced remarkably, compared with a configuration in which the pinching position of the claw portions by the butterfly spring coincides with the loosely fitting position of the protruding portions.

Next, the operation of the disc brake apparatus 10 that is configured as has been described heretofore when the brake is applied will be described.

Firstly, a hydraulic fluid is supplied into the cylinder 34 in the caliper body 32 of the caliper 30. The piston 36 that is accommodated within the cylinder 34 protrudes towards the rotor 100 in association with the supply of the hydraulic fluid, whereby the inner brake pad 60 that is held to the piston 36 is pressed against the sliding surface of the rotor 100.

When the inner brake pad 60 is pressed against the sliding surface of the rotor 100, receiving the reaction force resulting from the inner brake pad 60 being so pressed against the rotor 100, the caliper body 32 moves in a direction in which the caliper body 32 moves away from the rotor 100 along the guide pins 50a, 50b. The claw portions 44a, 44b which are connected together by the bridge portion 42 are drawn towards the sliding surface of the rotor 100 on the outer side of the rotor 100 as the caliper body 32 so moves. Since the outer brake pad 80 is held to the claw portions 44a, 44b, the rotor 100 is pinched by both the inner brake pad 60 and the outer brake pad 80.

When the rotor 100 is pinched by the inner brake pad 60 and the outer brake pad 80, the inner brake pad 60 and the outer brake pad 80 both generate frictional force between the rotor 100 and themselves and receive force which causes them to follow the rotor 100 to rotate together therewith. Then, the inner brake pad 60 is brought into contact with the torque receiving surface 20a of the inner torque receiving portion 14a which is disposed on the rotation exit side of the rotor, whereby braking torque is transmitted to the support 12.

The outer brake pad 80 is also brought into contact with the torque receiving  surface 26a of the outer torque receiving portion 24a which is disposed on the rotation exit side of the rotor in an initial stage of braking. Thereafter, in the event that the braking torque increases, the outer torque receiving portion 24a which is provided on the rotation exit side of the rotor moves so as to slightly deflect towards the rotation exit side of the rotor. As a result of the outer torque receiving portion 24a which is provided on the rotation exit side of the rotor deflecting slightly, the outer brake pad 80 moves towards the rotation exit side of the rotor by such an extent that the outer torque receiving portion 24a so deflects. In association with this movement, the protruding portions 88a, 88b which are formed on the outer brake pad 80 are brought into contact with rotor rotation exit side inner circumferential surfaces of the through holes 48a, 48b which are formed in the flange portions 46a, 46b. When the protruding portions 88a, 88b on the outer brake pad 80 are brought into contact with the inner circumferential surfaces of the through holes 48a, 48b in the flange portions 46a, 46b, the braking torque is transmitted to the caliper 30, whereby the caliper 30 moves in the direction of the rotation exit side of the rotor.

When the caliper 30 moves towards the rotation exit side of the rotor 100, the guide pin 50b which is fixed to the rotor rotation entrance side arm portion 38b of the caliper 30 is brought into contact with an inner circumferential surface (a rotor rotation exit side inner circumferential surface) of the guide hole 18b which is formed in the support 12. By this contact, the braking torque is transmitted to the support 12.

Since the support 12 is fixed to the vehicle body via the mounting holes 16, the support 12 can receive the braking torque which is transmitted from the brake pads.

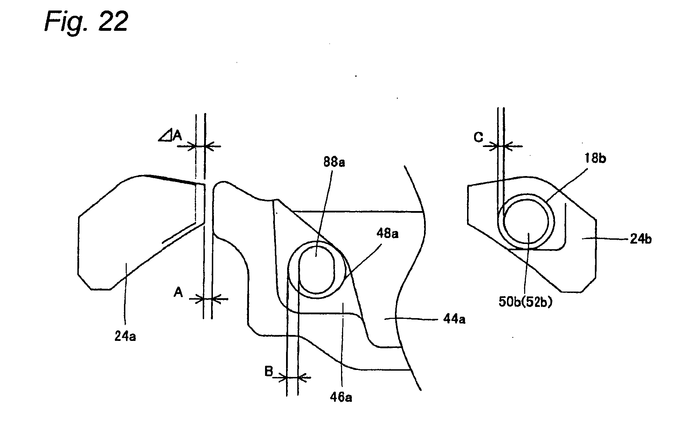

In order to realize the dispersion of the braking torque applied to the outer torque receiving portions 24a, 24b in this way, when a gap defined between the torque receiving surface 26a (26b) of the outer torque receiving portion 24a (24b) and the abutment surface 92a (92b) of the outer brake pad 80 is referred to as A, a gap defined between the protruding portion 88a (88b) of the outer brake pad 80 and the through hole 48a (48b) in the flange portion 46a (46b) of the claw portion 44a (44b) in the circumferential direction of the rotor is referred to as B, a gap defined between the guide pin 50b which is disposed on the rotation entrance side of the rotor and the guide hole 18b is referred to as C, and the amount of deflection of the outer torque receiving portion 24a when the braking torque is applied is referred to as $\Delta A$, the following relationships may be set therebetween with respect to the magnitude thereof (refer to Fig. 22).

Firstly, as to the relationship between the gap A and the gap B, a relationship of the gap A < the gap B is set. Namely, by setting the relationship of the gap A < the gap B, the abutment surface 92a is brought into abutment with the torque receiving surface 26a before the through holes 48a, 48b and the protruding portions 88a, 88b are brought into contact with each other.

Next, a relationship is set in which (the gap B - the gap A) is smaller than the deflection amount $\Delta A$ (that is, a relationship of (B-A) < $\Delta A$ is set). By setting this relationship, when the outer torque receiving portion 24a deflects towards the rotation exit side of the rotor in association with an increase in braking torque, the outer brake pad 80 moves towards the rotation exit side of the rotor. In association with this movement, the protruding portions 88a, 88b are brought into contact with the rotor  rotation exit side inner circumferential surfaces of the through holes 48a, 48b, whereby the braking torque is inputted into the caliper 30.

Then, a relationship is set in which (the deflection amount $\Delta A$ - (the gap B - the gap A)) is larger than the gap C (that is, a relationship of ($\Delta A$ - (B-A)) > C is set). By setting this relationship, the guide pin 50b is brought into contact with the inner circumferential surface of the guide hole 18b within the range of the deflection amount $\Delta A$, whereby the braking torque is inputted into the outer torque receiving portion 24b (the support 12) which is situated on the rotation entrance side of the rotor.

In the disc brake apparatus 10 which has the configuration and the function that have been described heretofore, in the outer brake pad 80, while the braking torque is received by the rotor rotation exit side torque receiving portion (the outer torque receiving portion 24a) in a normal braking area, in a high load area, the braking torque is also inputted into the caliper 30 via the protruding portions 88a, 88b, and the braking torque is also inputted into the rotor rotation entrance side torque receiving portion (the outer torque receiving portion 24b) via the rotor rotation entrance side guide pin 50b. Because of this, the braking torque is inputted step by step in a dispersed fashion according to the magnitude of the braking torque, this obviating the necessity of a bridge on an outer side of the support 12.

Because of this, in this embodiment, a width between the pair of outer torque receiving portions 24a, 24b and a width of the outer brake pad 80 in the circumferential direction of the rotor are determined so that at least the gap B is larger than the gap A.

By making the outer bridge of the support 12 unnecessary, the reduction in size and weight of the support 12, that is, the reduction in size and weight of the disc brake apparatus 10 can be realized. In addition, in the support 12 of the disc brake apparatus 10 according to this embodiment, the outer torque receiving portions 24a, 24b are provided at the distal end portions of the rotor pass portions 22a, 22b, respectively. Because of this, compared with the conventional support which is formed into an inverted U-shape by the inner torque receiving portion, the outer torque receiving portion and the rotor pass portion when viewed from the side thereof, the formation of the castings is facilitated. Further, both the inner torque receiving portions 14a, 14b and the outer torque receiving portions 24a, 24b can be formed by machining only the single surface of the support 12 with which the brake pad is brought into contact, providing a good machinability. Additionally, when machining the support 12, since no complex groove machining is involved, no complex control is necessary that would otherwise be involved in broaching work using the special tool or milling work.

In addition, by forming the protruding portions 88a, 88b of the outer brake pad 80 into the elliptic shape in which the major axis is directed in the radial direction of the rotor 100 and the minor axis is directed in the circumferential direction thereof, a radial backlash of the protruding portions 88a, 88b relative to the circular through holes 48a, 48b can be made small, while a circumferential backlash of the former relative to the latter can be made large. Because of this, by controlling the clearances between the through holes 48a, 48b and the protruding portions 88a, 88b, the timing at which the braking torque is inputted into the support 12 in the dispersed fashion can be controlled.

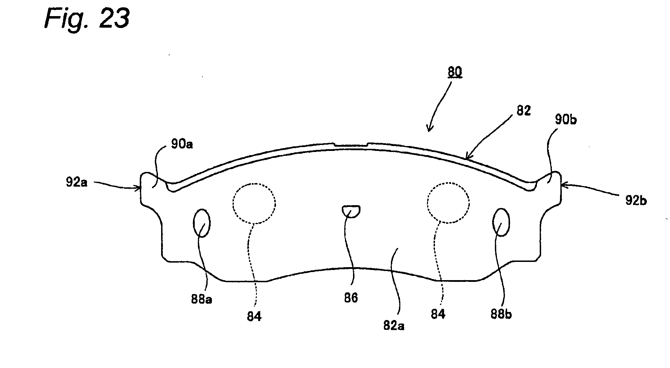

In the embodiment, while the protruding portions 88a, 88b on the outer brake pad 80 are formed into the elliptic shape, the shape of the protruding portions 88a, 88b is not limited thereto. Hence, the protruding portions 88a, 88b may be formed into an oval shape as shown in Fig. 23. Even in the event that the protruding portions 88a, 88b are formed into the oval shape, the same advantage as that of the disc brake apparatus 10 according to the embodiment can be provided.

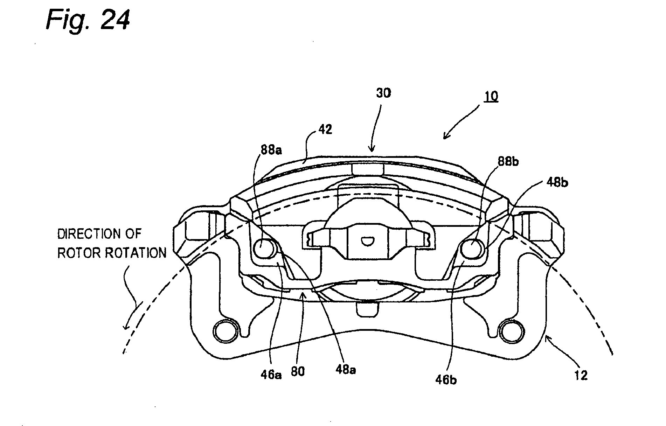

In addition, in the embodiment, while the protruding portions 88a, 88b are formed into the elliptic shape while the through holes 48a, 48b are formed into the circular shape, this is the example in which the importance is given to the machinability in mass production. For example, even in the event that the protruding portions 88a, 88b are formed into a circular shape while the through holes 48a, 48b are formed into an elliptic shape as shown in Fig. 24, the same advantage as that provided by the disc brake apparatus 10 according to this embodiment can be provided. Here, elliptic through holes 48a, 48b are formed into such an elliptic shape in which a major axis is directed in the circumferential direction of the rotor 100 while a minor axis is directed in the radial direction thereof. This is because by adopting this configuration, the degree of freedom in the circumferential direction can be maintained while the protruding portions 88a, 88b which have the circular shape when projected from the front are restricted from moving in the radial direction of the rotor.

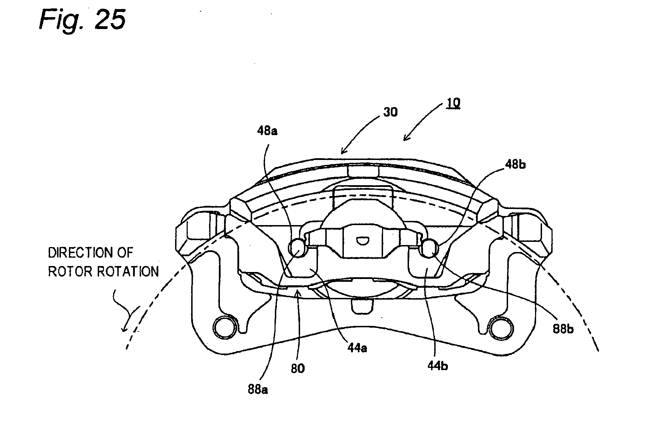

Additionally, in the embodiment, giving the importance to the machinability of the caliper 30, the through holes 48a, 48b in which the protruding portions 88a, 88b of the outer brake pad 80 are loosely fitted are described as being formed in the flange portions 46a, 46b of the claw portions 44a, 44b. However, as shown in Fig. 25, the through holes 48a, 48b may be formed in bodies of the claw portions 44a, 44b and may be formed into sac holes which have openings inside the bodies of the claw portions 44a, 44b.

In addition, in order to solve the problem of the invention, the loose fitting should be ensured between the claw portions 44a, 44b and the outer brake pad 80 and the relationship should be set in which the gap between the outer torque receiving portions 24a, 24b of the support 12 and the outer brake pad 80 is smaller the circumferential backlash between the outer brake pad 80 and the claw portions 44a, 44b. Because of this, the plurality of through holes does not necessarily have to be provided in the claw portions 44a, 44b, and the loose fitting may be ensured by making use of the bodies of the claw portions 44a, 44b. Further, the relationship between the protruding portions 88a, 88b of the outer brake pad 80 and the recess portions (the through holes 48a, 48b) may be such that both the protruding portions 88a, 88b and the recess portions have similar shapes.

In the disc brake apparatus in which the recess portions are provided on the claw portion, a completely fitted state cannot be realized between the claw portions and the outer brake pad due to constructional and functional reasons. The recess portions which are provided on the side of the claw portions are generally formed by cutting work, and therefore, the working accuracy becomes high. In contrast with the recess portions so formed, forming work of the protruding portions on the pressure plate is implemented through pressing work such as embossing. Because of this, pitches and dimensional accuracies of both the recess portions and the protruding portions do not match, and it becomes difficult to ensure a fitted state according to a permissible tolerance between the protruding portions and the recess portions. Because of this, in general, it is designed that a gap is defined between the recess portions in the claw portions and the protruding portions on the pressure plate.

In addition, in order to input braking torque into a support which holds a caliper in a dispersed fashion, a configuration is adopted in which the timing at which the outer brake pad collides with the support when the brake is applied is shifted from the timing at which the protruding portions on the pressure plate contact the recess portions in the claw portions in order to realize that function. One specific example of this configuration is that a gap which is larger than a gap defined between an outer brake pad and a support is defined between protruding portions on the outer brake pad and recess portions in claw portions.

In the disc brake apparatus that is configured in this way, since the gap is defined between the protruding portions and the recess portions, noise (rattling noise) is generated when the outer brake pad moves in a radial direction and a circumferential direction of a rotor to be brought into contact with other elements, and this noise is raised as a problem.

In view of the above problems, flange portions 46b, 46a are formed, respectively, on the claw portion 44b which is disposed on the rotation entrance side of the rotor 100 so as to protrude towards the rotation entrance side and the claw portion 44a which is disposed on the rotation exit side of the rotor 100 so as to protrude towards the rotation exit side. The flange portions 46a, 46b are formed thinner than the claw portions 44a, 44b, so as to suppress the increase in weight of the caliper 30. Loosely fitting portions which include recess portions and through holes are provided in the flange portions 46a, 46b, respectively, and protruding portions 88a, 88b on the outer brake pad 80, which will be described in detail later, are loosely fitted in the through holes 48a, 48b, respectively. By loosely fitting the protruding portions 88a, 88b in the through holes 48a, 48b, respectively, the protruding portions 88a, 88b can function not only to hold the outer brake pad 80 but also to prevent the rotation of the outer brake pad 80.. In the following description, the loosely fitting portions will be referred to as through holes 48a, 48b as so shown in the drawings unless otherwise stated.

As is seen from Figs. 11 and 13, the flange portions 46a, 46b are provided in positions where the flange portions 46a, 46b avoid an outer wall of the cylinder 34 in the caliper body 32 when they are projected. Specifically, the flange portion 46b which is provided on the rotation entrance side of the rotor 100 with respect to the center of the caliper 30 is provided further towards the rotation entrance side than the outer wall of the cylinder 34, while the flange portion 46a which is provided on the rotation exit side of the rotor 100 is provided further towards the rotation exit side than the outer wall of the cylinder 34, so as to be located in positions which are not superposed on the position where the cylinder 34 is formed. By adopting this configuration, the through holes 48a, 48b can easily be formed from the side of the caliper body 32. This is because by adopting the configuration in which the through holes 48a, 48b are formed from sides of the flange portions 46a, 46b which oppositely face the caliper body 32, there will be no such situation that burrs are produced on surfaces of the flange portions 46a, 46b which oppositely face the rotor when the through holes are formed.

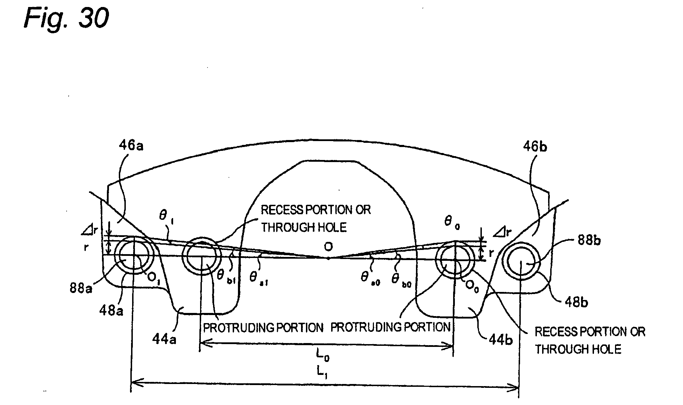

Additionally, by adopting the configuration in which the flange portions 46a, 46b are provided at a rotation exit side and at a rotation entrance side of the rotor rotation exit side claw portion 44a and the rotor rotation entrance side claw portion 44b, respectively, and the through holes 48a, 48b are provided in the flange portions 46a, 46b, respectively, a pitch between the through holes 48a, 48b can be made long, compared with a configuration in which through holes and recess portions are provided directly in the claw portions 44a, 44b. According to the configuration in which the pitch between the through holes 48a, 48b which hold the outer brake pad 80 is made long, as shown in Fig. 30, backlash in a direction in which the outer brake pad 80 is rotated can be made small, this contributing to the suppression of so-called rattling noise.

Specifically, when a center-to-center pitch of recess portions or through holes when they are provided in the claw portions 44a, 44b is referred to as $L_0$, a center-to-center pitch between the through holes 48a, 48b according to the embodiment is referred to as $L_1$, a radius of the protruding portion is referred to as r, and a gap (at one side) between the protruding portion and the recess portion (the through hole) is referred to as $\Delta r$, the following calculations are established for rotational angles $\theta_0$, $\theta_1$. Additionally, in Fig. 30, an angle formed by a center point $O_0$ of the protruding portion, a center point O and an apex $P_{a0}$ of the protruding portion is referred to as $\theta_{a0}$, and an angle formed by a center point of the recess portion (the center point $O_0$ of the protruding portion), the center point O and an apex $P_{b0}$ of the recess portion is referred to as $\theta_{b0}$. Additionally, an angle formed by a center point $O_1$ of the protruding portion, the center point O and an apex $P_{a1}$ of the protruding potion is referred to as $\theta_{a1}$, and an angle formed by a center point of the through hole (the center point $O_1$ of the protruding portion), the center point O and an apex $P_{b1}$ of the through hole is referred to as $\theta_{b1}$.

According to a basic expression of a trigonometric function, Expression 1 is established as below;

$$\tan\theta = \frac{2R}{C}$$

$$\theta = a\tan(\tan\theta) = a\tan\left(\frac{2R}{C}\right) \ ... \ (\text{Expression 1})$$

Here, the "R" is a radial distance, and the "C" is a center-to-center distance. Then, the rotational angle $\theta_0$ when the center-to-center distance (Pitch) is referred to as $L_0$ and the rotational angle $\theta_1$ when the center-to-center distance (Pitch) is referred to as $L_1$ are individually obtained as expressed by Expression 2 below.

$$\theta_0 = \theta_{b0} - \theta_{a0}$$

$$\theta_1 = \theta_{b1} - \theta_{a1} \quad \text{... (Expression 2)}$$

When substituting the radial distance and the center-to-center distance in Expression 1 by a radial distance (r or r+$\Delta$A) and a center-to-center distance (the pitch $L_0$) which are used to obtain $\theta_{a0}$, $\theta_{b0}$ and what has resulted from the substitution is applied to Expression 2, then, Expression 3 can be obtained which is an expression for obtaining the rotational angle $\theta_0$ when the center-to-center distance is $L_0$ as below;

$$\theta_1 = a\tan\left(\frac{2(r+\Delta r)}{L_0}\right) - a\tan\left(\frac{2r}{L_0}\right)$$
$$= \frac{2a\tan r}{L_0} + \frac{2a\tan\Delta r}{L_0} - \frac{2a\tan r}{L_0} \text{ ... (Expression 3)}$$
$$= \frac{2a\tan\Delta r}{L_0}$$

On the other hand, when substituting the radial distance and the center-to-center distance in Expression 1 by a radial distance (r or r+$\Delta$A) and a center-to-center distance (the pitch $L_1$) which are used to obtain $\theta_{a1}$, $\theta_{b1}$ and what has resulted from the substitution is applied to Expression 2, then, Expression 4 can be obtained which is an expression for obtaining the rotational angle $\theta_1$ when the center-to-center distance is $L_1$ as below;

$$\theta_1 = a\tan\left(\frac{2(r+\Delta r)}{L_1}\right) - a\tan\left(\frac{2r}{L_1}\right)$$
$$= \frac{2a\tan r}{L_1} + \frac{2a\tan\Delta r}{L_1} - \frac{2a\tan r}{L_1} \text{ ... (Expression 4)}$$
$$= \frac{2a\tan\Delta r}{L_1}$$

In comparison of Expression 3 with Expression 4, since $L_1 > L_0$ exists as a precondition, the relationship between $\theta_0$ and $\theta_1$ becomes $\theta_0 > \theta_1$. Consequently, even when the gaps (the plays=$\Delta$r) in the radial direction of the rotor which are defined between the protruding portions 88a, 88b of the outer brake pad 80 and the through holes 48a, 48b are the same, the backlash in the direction in which the outer brake pad 80 is rotated can be made smaller by such an extent that the distance from the center of the caliper 30 (the center-to-center distance) becomes longer.

Additionally, in this embodiment, for example, as shown in Fig. 13, the positions of the through holes 48a, 48b with respect to the radial direction of the rotor are located further radially inwards of the rotor than the position of the cylinder 34 with respect to the radial direction of the rotor. When the through holes (the recess portions) in which the protruding portions 88a, 88b of the outer brake pad 80 are loosely fitted are provided in the claw portions 44a, 44b, the possibility of deterioration in rigidity of the caliper 30 is lowered more as the locations where the through holes are formed move further radially inwards of the rotor 100. On the other hand, the claw portions 44a, 44b are formed so as to be narrower in their widths along the circumferential direction of the rotor 100 towards distal ends thereof or as they extend further radially inwards of the rotor 100 from the characteristics on their form. Because of this, in a configuration in which through holes are provided directly in the claw portions 44a, 44b, there is caused a problem that a minimum thickness required on the peripheries of the through holes is not attained or the rigidity of the claw portions 44a, 44b becomes insufficient, requiring the adoption of a means for increasing the thickness or the width of the claw portions 44a, 44b. In contract with this, in this embodiment, since the configuration is adopted in which the through holes 48a, 48b are provided in the flange portions 46a, 46b which are formed separately from the claw portions 44a, 44b, the through holes 48a, 48b can be provided further radially inwards of the rotor 100 than in the conventional examples without increasing the thickness or the width of the claw portions 44a, 44b.

Additionally, in the disc brake apparatus 10 according to this embodiment, steps portions are individually provided between surfaces of the flange portions 46a, 46b which oppositely face the outer brake pad 80 and surfaces of the claw portions 44a, 44b which oppositely face the outer brake pad 80. The step portions are formed so as to define a gap between the flange portions 46a, 46b and the outer brake pad.

In addition, although it will be described in detail later, the protruding portions 88a, 88b which are loosely fitted in the through holes 48a, 48b in the flange portions 46a, 46b are formed on a pressure body 82a of a pressure plate 82 of the outer brake pad 80. Since the protruding portions 88a, 88b are formed through pressing work such as embossing, there is a tendency that the flatness of portions of the plate surface which lie on the peripheries of the protruding portions 88a, 88b is deteriorated. In view of the conditions actually occurring, the step portions that are provided between the flange portions 46a, 46b and the claw portions 44a, 44b should be higher than the height of distortion occurring on the peripheries of the protruding portions 88a, 88b and lower than the height of the protruding portions 88a, 88b.

By adopting this configuration, the portions of the plate surface (the plate body 82a) surrounding the peripheries of the protruding portions 88a, 88b of which the flatness is deteriorated due to the formation of the protruding portions 88a, 88b do not surface contact the oppositely facing surfaces of the flange portions 46a, 46b where the through holes 48a, 48b are formed, and the pressing of the outer brake pad 80 is implemented only by the claw portions 44a, 44b. Because of this, noise and unbalanced pressing of the outer brake pad 80 are suppressed that would otherwise occur in association with an unstable contact. This advantage obviates the necessity of performing a severe control on the flatness of the peripheries of the protruding portions 88a, 88b, thereby making it possible to suppress the increase in production costs of the outer brake pad 80.

In the disc brake apparatus 10 which has the configuration and the function that have been described heretofore, by increasing the distance (the center-to-center distance) between the through holes 48a, 48b in which the protruding portions 88a, 88b on the outer brake pad 80 are loosely fitted longer than that of the conventional examples, a backlash angle of the outer brake pad 80 can be reduced, this contributing to the suppression of rattling noise, even in the event that the gaps (clearances) in the radial direction of the rotor between the through holes 48a, 48b and the protruding portions 88a, 88b stay the same between the embodiment and the conventional examples.

In addition, since the configuration is adopted in which the flange portions 46a, 46b are provided in the positions where the flange portions are not superposed on the outer wall of the cylinder 34 when they are projected and the through holes 48a, 48b are provided in the flange portions 46a, 46b, the boring work of the through holes can be implemented without using any special tool or equipment even from an inner side of the caliper 30. Consequently, the productivity is enhanced, and the machining cost can also be suppressed.

Additionally, no holes are bored directly in the claw portions 44a, 44b, and the flange portions 46a, 46b are provided on the claw portions 44a, 44b, the holes being bored in the flange portions 46a, 46b, thereby making it possible to prevent the reduction in rigidity of the claw portions 44a, 44b that would otherwise be the case due to boring the holes in the claw portions 44a, 44b. Further, the locations where the through holes 48a, 48b are provided do not contribute to the pressing of the outer brake pad by the claw portions 44a, 44b which are the reaction force receiving portions. Because of this, in the outer brake pad 80, the surface contact pressure of the sliding surface is reduced at locations on the lining 94 which correspond to the through holes. In addition, the locations are surface portions of the lining 94 which correspond to the locations on the pressure plate 82 where the protruding portions are formed. In the disc brake apparatus 10 according to the embodiment, the portions where the surface contact pressure is reduced are disposed at end portions of the outer brake pad 80 in the circumferential direction of the rotor 100, this contributing to the suppression of generation of so-called brake noise which is noise generated by the dragging of the brake.

As shown in Fig. 25, a disc brake apparatus 10 includes basically a support 12 and a caliper 30, an inner brake pad 60, an outer brake pad 80 and a rotor 100. Here, although not shown entirely, the rotor 100 is a ring-shaped friction plate which follows a wheel (not shown) to rotate together therewith. With frictional surfaces of the rotor 100 clamped or pinched by the inner brake pad 60, which will be described in detail later, and the outer brake pad 80, frictional force is generated on sliding surfaces to thereby suppress the rotation of the wheel, whereby braking force is obtained.

The support 12 includes basically a pair of inner torque receiving portions 14a, 14b, an inner bridge portion 28, rotor pass portions 22a, 22b, and a pair of outer torque receiving portions 24a, 24b.

The inner torque receiving portions 14a, 14b and the outer torque receiving portions 24a, 24b both have a function to receive braking torque generated in the inner brake pad 60, which will be described in detail later, or the outer brake pad 80 to thereby generate, in turn, braking force.

Mounting holes 16, guide holes 18a, 18b and torque receiving surfaces 20a, 20b are formed in and on the inner torque receiving portions 14a, 14b.

The guide holes 18a, 18b are sac holes into which guide pins 50a, 50b can be inserted, and the caliper 30, which will be described in detail later, is allowed to slide in the direction of a rotor axis by the guide pins 50a, 50b which are so inserted.

The outer torque receiving portions 24a, 24b have torque receiving surfaces 26a, 26b, respectively.

The caliper 30 includes basically a caliper body 32, claw portions 44a, 44b and a bridge portion 42. The caliper body 32 is disposed on an inner side of the rotor 100 and includes a cylinder 34 and arm portions 38a, 38b. As shown in Fig. 2, in the cylinder 34, a cup-shaped piston 36 is disposed.

The caliper 30 is assembled to the support 12 based on the arm portions 38a, 38b, and the arm portions 38a, 38b are provided to extend from an outer wall of the cylinder 34 as a starting point towards a rotation exit side and a rotation entrance side the rotor 100, respectively, so as to make a pair. Internally threaded holes are formed in distal end portions of the arm portions 38a, 38b, respectively, and the guide pins 50a, 50b, which will be described in detail later, are screwed into the internally threaded holes, respectively. By the guide pins 50a, 50b being inserted into the guide holes 18a, 18b, respectively, the caliper 30 is allowed to slide in an axial direction thereof. Therefore, a center-to-center pitch of the guide holes 18a, 18b in the support 12 is made to coincide with a center-to-center pitch of the internally threaded holes in the arm portions 38a, 38b.

The guide pins 50a, 50b are pins which have sliding portions 52a, 52b, fixed portions 54a, 54b and bolt heads 56a, 56b (refer to Fig. 3).

The claw portions 44a, 44b are disposed on an outer side of the rotor 100 and constitute a pair of reaction force receiving portions which are provided on the rotation exit side and the rotation entrance side of the rotor 100 so as to hold oppositely facing positions on the cylinder 34 in the caliper body 32 therebetween. Loosely fitting portions which include recess portions and through holes are provided in the claw portions 44a, 44b so that protruding portions 88a, 88b on the outer brake pad 80, which will be described in detail later, are loosely fitted thereinto. Thus, the loosely fitting portions so provided are allowed to function not only to hold but also to prevent the rotation of the outer brake pad 80. It should be noted that in the following description, the loosely fitting portions will be referred to as through holes 48a, 48b as shown in the drawings unless any special examples are shown.

The bridge portion 42 is a connecting portion which extends over an outer circumference of the rotor 100 so as to connect together the caliper body 32 and the claw portions 44a, 44b.

The inner brake pad 60 is a brake pad which is held to the piston 36 in the caliper body 32. The inner brake pad 60 includes basically a pressure plate 62 and a lining 72.

As shown in Fig. 2, the inner brake pad 60 which is configured basically in this way is held in the caliper 30 by mounting a mounting spring 74 on a spring mounting portion 66 which is formed on the pressure plate 62 and biasing the mounting spring 74 to an inner wall of a recess portion in the cup-shaped piston 36.

The outer brake pad 80 is a brake pad which is held by a butterfly spring 96 based on the through holes 48a, 48b which are formed in the claw portions 44a, 44b. As with the inner brake pad 60, the outer brake pad 80 also includes basically a pressure plate 82 and a lining 94.

The pressure plate 82 includes a plate body 82a and lug portions 90a, 90b. The lining 94 is affixed to a surface (hereinafter, referred to as a front surface) of the plate body 82a which oppositely faces the rotor 100. On the other hand, a protruding spring mounting portion 86 to which the butterfly spring 96 for holding the outer brake pad 80 is fixed and the protruding portions 88a, 88b which are loosely fitted in the through holes 48a, 48b which are formed in the claw portions 44a, 44b are formed on a surface (hereinafter, referred to as a rear surface) of the plate body 82a which is opposite to the lining affixing surface.

In the outer brake pad 80 according to this embodiment, the protruding portions 88a, 88b are formed into an elliptic shape. Specifically, the protruding portions 88a, 88b each have an elliptic shape in which an axis which is disposed along the radial direction of the rotor 100 is referred to as a major axis and an axis which is disposed along a circumferential direction of the rotor 100 is referred to as a minor axis. By adopting this configuration, in a relationship with the circular through holes 48a, 48b which are formed in the claw portions 44a, 44b, a gap defined in the radial direction of the rotor 100 and a gap defined in the circumferential direction thereof are made to differ from each other. In the case of the protruding portions 88a, 88b according to the embodiment, the gap defined in the circumferential direction of the rotor 100 becomes larger than the gap defined in the radial direction thereof. Because of this, not only can a radial oscillation of the outer brake pad 80 be suppressed, but also the rattling noise and squeal noise can be reduced. It should be noted that the spring mounting portion 86 and the protruding portions 88a, 88b can be formed through embossing. When the spring mounting portion 86 and the protruding portions 88a, 88b are formed through embossing, recess portions are formed on the surface of the plate body 82a in corresponding positions to the positions where the spring mounting portion 86 and the protruding portions 88a, 88b are formed.

The lug portions 90a, 90b are provided to extend from a rotor rotation exit side end portion and a rotor rotation entrance side end portion of the plate body 82a towards the rotation exit side and the rotation entrance side of the rotor, respectively. In the outer brake pad 80, abutment surfaces 92a, 92b are formed on the lug portions 90a, 90b, respectively. Because of this, the height at which the lug portions 90a, 90b are disposed needs to match that of the torque receiving surfaces 26a, 26b of the outer torque receiving portions 24a, 24b which are formed at distal ends of the rotor pass portions 22a, 22b. Consequently, the lug portions 90a, 90b of the outer brake pad 80 are provided to extend radially outwards of the rotor 100 while being inclined, and a rotor rotation exit side end portion of the lug portion 90a and a rotor rotation entrance side end portion of the lug portion 90b are made into the abutment surfaces 92a, 92b, respectively.

Because of this, the abutment surfaces 92a, 92b of the outer brake pad 80 are disposed on an outer circumferential side of the rotor 100, that is, further radially outwards than the center of the brake pad.

The outer brake pad 80 is assembled to the claw portions 44a, 44b by loosely fitting the protruding portions 88a, 88b in the through holes 48a, 48b and biasing the outer brake pad 80 towards the claw portions 44a, 44b by making use of the butterfly spring 96. Specifically, the claw portions 44a, 44b should be placed between a rear surface of the plate body 82a of the outer brake pad 80 and the butterfly spring 96 so as to be pinched therebetween.

In the brake pad (the outer brake pad 80) according to this embodiment which is basically configured as described above, when a center-to-center pitch between the two through holes 48a, 48b in the claw portions 44a, 44b of the caliper 30 is referred to as L1 and a center-to-center pitch between the two protruding portions 88a, 88b on the plate body 82a is referred to as L2, L2 is determined based on L1 so that any of the following relationships is satisfied. Namely, any one of relationships of L1<L2, L1=L2 and L1>L2 should be satisfied.

In these relationships, when the relationship of L1<L2 is satisfied, the protruding portion 88a which is positioned on the rotation exit side of the rotor is brought into contact with a rotor rotation exit side inner circumferential wall of the through hole 48a before the other protruding portion 88b is brought into contact with the corresponding through hole 48b, generating thereby a so-called pushing anchor state. Thereafter, when the braking torque is increased, a slight distortion is generated in the caliper 30, whereby the outer brake pad is shifted towards the rotation exit side of the rotor. By this shift of the outer brake pad, the protruding portion 88b that is positioned on an rotation entrance side of the rotor is also brought into contact with a rotor rotation exist side circumferential wall of the through hole 48b, generating thereby pushing and drawing anchor states.

In addition, when the relationship of L1=L2 is satisfied, the protruding portion 88a that is positioned on the rotation entrance side of the rotor 100 and the protruding portion 88b which is positioned on the rotation exit side of the rotor 100 are simultaneously brought into contact with the respective rotor rotation exit side inner circumferential walls of the through holes 48a, 48b. This simultaneously generates pushing and drawing anchor states.

Further, when the relationship of L1>L2 is satisfied, the protruding portion 88b that is positioned on the rotation entrance side of the rotor 100 is brought into contact with the rotor rotation exit side inner circumferential wall of the through hole 48b before the other protruding portion 88a is brought into contact with the corresponding through hole 48a, which generates a so-called drawing anchor state. Thereafter, when the braking torque is increased, not only is a distortion generated in the caliper, but also the outer brake pad 80 is shifted towards the rotation exit side of the rotor 100. Then, the protruding portion 88a which is positioned on the rotation exit side of the rotor 100 is also brought into contact with the rotor rotation exit side inner circumferential wall of the through hole 48a, which generates drawing and pushing (pushing and drawing) anchor states.

An upper limit value of L2 when the relationship of L1<L2 is satisfied and a lower limit of L2 when the relationship L1>L2 is satisfied depend on a ratio in magnitude of the through holes 48a, 48b to the protruding portions 88a, 88b. Namely, the upper limit value and the lower limit value of L2 in both the relationships should be determined within a range where the two protruding portions 88a, 88b are allowed to be loosely fitted in the two through holes 48a, 48b, respectively.

Next, the operation of the disc brake apparatus 10 that is configured as has been described heretofore when the brake is applied will be described with the outer brake pad 80 according to this embodiment adopted in the disc brake apparatus 10.

Firstly, a hydraulic fluid is supplied into the cylinder 34 in the caliper body 32 of the caliper 30. The piston 36 that is accommodated within the cylinder 34 protrudes towards the rotor 100 in association with the supply of the hydraulic fluid, whereby the inner brake pad 60 that is held to the piston 36 is pressed against the sliding surface of the rotor 100.

When the inner brake pad 60 is pressed against the sliding surface of the rotor 100, receiving the reaction force resulting from the inner brake pad 60 being so pressed against the rotor 100, the caliper body 32 moves in a direction in which the caliper body 32 moves away from the rotor 100 along the guide pins 50a, 50b. The claw portions 44a, 44b which are connected together by the bridge portion 42 are drawn towards the sliding surface of the rotor 100 on the outer side of the rotor 100 as the caliper body 32 so moves. Here, since the outer brake pad 80 is held to the claw portions 44a, 44b, the rotor 100 is pinched by both the inner brake pad 60 and the outer brake pad 80.

When the rotor 100 is pinched by the inner brake pad 60 and the outer brake pad 80, the inner brake pad 60 and the outer brake pad 80 both generate frictional force between the rotor 100 and themselves and receive force which causes them to follow the rotor 100 to rotate together therewith. Then, the movements of both the inner brake pad 60 and the outer brake pad 80 are stopped by the support 12 directly or indirectly, whereby braking force is generated in the vehicle in which the disc brake apparatus 10 is installed.

As in the outer brake pad 80 according to this embodiment, by forming the protruding portions 88a, 88b into the ellipse in which the major axis is directed in the radial direction of the rotor 100, while the minor axis is directed in the circumferential direction of the rotor, a backlash in the radial direction of the rotor 100 can be made smaller than a backlash in the radial direction thereof relative to the circular through holes 48a, 48b. Because of this, the oscillation of the outer brake pad 80 in the radial direction can be suppressed, thereby making it possible to reduce the rattling noise and squeal noise.

In the embodiment, while the shape of the protruding portions 88a, 88b of the outer brake pad 80 when they are projected from the front (the shape resulting when viewed from the top) is elliptic, the shape of the protruding portions 88a, 88b is not limited thereto. Specifically, the protruding portions 88a, 88b may take any of forms shown in Figs. 11 to 14. Although Figs. 11 to 14 show only the form of the rotor rotation exit side of the outer brake pad 80, the form of the rotor rotation entrance side thereof appears axisymmetric with the form on the rotor rotation exit side.

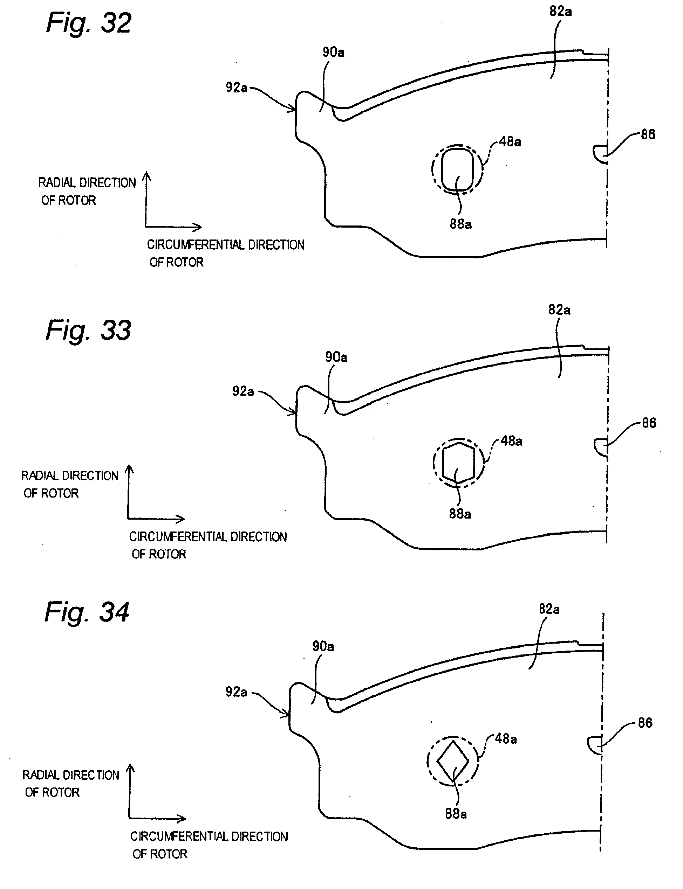

A form shown in Fig. 32 illustrates an example in which the shape of the protruding portion 88a (88b) when it is projected from the front is rectangular and then, respective apexes (corners) of the rectangular shape are rounded into an arc-like shape. Even in the event the projected shape is kept rectangular, a similar advantage to that provided by the embodiment can be obtained. However, the concentration of stress occurring when braking force is applied can be suppressed by rounding the corner portions into the arc-like shape.

Additionally, a form shown in Fig. 33 illustrates an example in which the shape of the protruding portion 88a (88b) when it is projected from the front is hexagonal. Even in the event that the shape of the protruding portion 88a (88b) when it is projected from the front takes a polygonal shape in which the number of corner portions is increased, the resulting example can be regarded part of the invention. In addition, it is natural that the respective corner portions may be rounded into the arc-like shape.

In addition, a form shown in Fig. 34 illustrates an example in which the shape of the protruding portion 88a (88b) when it is projected from the front is a parallelogram and in corner portions which are connected together by diagonals, corner portions which are connected together by a long diagonal are disposed along the radial direction of the rotor, while corner portions which are connected together by a short diagonal are disposed along the circumferential direction of the rotor. Even in the event that this configuration is adopted, the relationship between the major axis and the minor axis of the protruding portion 88a (88b) can be made similar to that of the embodiment, and the resulting example can be regarded part of the invention.

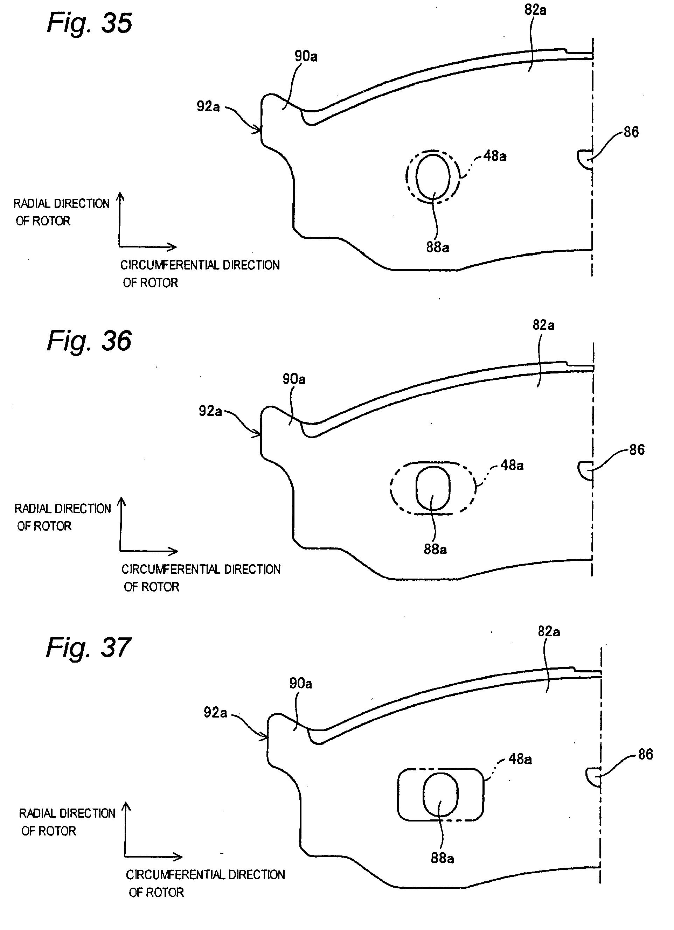

Further, a form shown in Fig. 35 illustrates an example in which the elliptic shape of the protruding portion 88a (88b) when it is projected from the front is made into an oval shape.

In the description that has been made heretofore, the through holes 48a, 48b which are formed in the claw portions 44a, 44b of the disc brake apparatus 10 to which the brake pad according to the invention is applied are described as having the circular shape when they are projected from the front, while the protruding portions 88a, 88b are allowed to take the shapes that have been described above. However, the brake pad (the outer brake pad 80) according to the invention can also be applied to disc brake apparatuses which have through holes shown in Figs. 15 and 16 and can exhibit similar advantages to that exhibited by the embodiment.

In an example shown in Fig. 36, a through hole 48a (48b) is formed into an elliptic shape, and an axis extending along the radial direction of the rotor 100 is referred to as a minor axis, while an axis extending along the circumferential direction of the rotor 100 is referred to as a major axis. When the through hole 48a (48b) is configured like this, as described in the embodiment, a backlash of a protruding portion 88a (88b) in the radial direction of the rotor can be made smaller than a backlash thereof in the circumferential direction of the rotor. Consequently, the brake pad according to the invention can be applied.

Additionally, in an example shown in Fig. 37, a through hole 48a (48b) is formed into a rectangular shape, and respective corner portions of the rectangular shape are rounded into an arc-like shape. Even with a disc brake apparatus which includes a caliper having the through hole 48a (48b) that is configured as described above, the brake pad according to the invention can be applied thereto.

In addition, in the embodiment, as a disc brake apparatus to which the brake pad according to the invention can be applied, the disc brake apparatus has been described which includes the caliper 30 in which the through holes 48a, 48b are provided in the claw portions 44a, 44b. However, the brake pad (the outer brake pad 80) according to the invention can also be applied to a disc brake apparatus shown in Fig. 1 in which flange portions 46a, 46b are provided on outer edge sides or inner edge sides (on the outer edge sides in the example shown in Fig. 1) of claw portions 44a, 44b and through holes 48a, 48b are provided in the portions so formed which constitute part of the claw portions.

Further, The guide holes 18a, 18b are provided so as to be sac holes into which guide pins 50a, 50b can be inserted, and the caliper 30, which will be described in detail later, is allowed to slide in the direction of a rotor axis by the guide pins 50a, 50b when they are inserted into the guide holes 18a, 18b, respectively. The guide holes 18a, 18b have openings at upper ends of the inner torque receiving portions 14a, 14b and are bored deep into interiors of the outer torque receiving portions 24a, 24b via the rotor pass portions 22a, 22b.

The outer torque receiving portions 24a, 24b are provided on extensions of the rotor pass portions 22a, 22b and have torque receiving surfaces 26a, 26b, respectively. The torque receiving surfaces 26a, 26b are each formed through cutting as a flat surface which is defined by two axes which extend in an axial direction  and a radial direction of the rotor 100. Because of this, compared with the conventional torque receiving portions which each have the irregular shape, the torque receiving surfaces 26a, 26b are easy to be formed, and when machining the torque receiving surfaces 26a, 26b, there is required no special tool. Because of this, it is possible to reduce the machining time and machining cost. Additionally, the outer torque receiving portions 24a, 24b according to this embodiment are located further radially outwards of the rotor than an outer edge of the rotor 100. Being formed in this way, a reduction in size and weight of the support can be realized, compared with the form in which the outer torque receiving portions are located as far as positions which lie further radially inwards of the rotor than the outer edge of the rotor 100, whereby the reduction in size and weight of the disc brake apparatus 10 in whole can be realized.

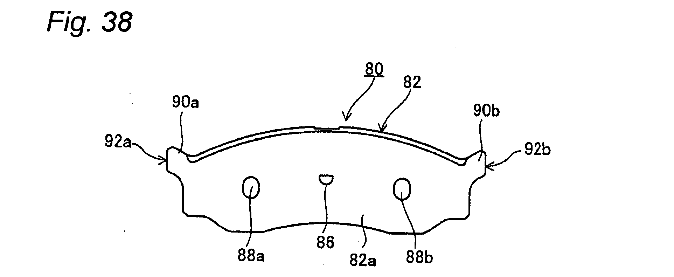

The lug portions 90a, 90b are provided to extend from a rotor rotation exit side end portion and a rotor rotation entrance side end portion of the plate body 82a towards the rotation exit side and the rotation entrance side of the rotor, respectively. In the outer brake pad 80, abutment surfaces 92a, 92b are formed on the lug portions 90a, 90b, respectively. These abutment surfaces 92a, 92b are brought into abutment with the torque receiving surfaces 26a, 26b of the outer torque receiving portions 24a, 24b. Because of this, the height at which the lug portions 90a, 90b are disposed needs to match that of the torque receiving surfaces 26a, 26b of the outer torque receiving portions 24a, 24b which are formed at distal ends of the rotor pass portions 22a, 22b. Consequently, the lug portions 90a, 90b of the outer brake pad 80 are provided to extend radially outwards of the rotor 100 while being inclined, and a rotor rotation exit side end portion of the lug portion 90a and a rotor rotation entrance side end portion of the lug portion 90b are made into the abutment surfaces 92a, 92b, respectively. Because of this, the abutment surfaces 92a, 92b of the outer brake pad 80 are disposed further radially outwards of the rotor than the outer edge of the rotor 100, that is, further radially outwards than the center of the brake pad. In Fig. 38, a rear view of the outer brake pad is shown.

Additionally, the abutment surfaces 92a, 92b are also formed so as to surface contact the torque receiving surfaces 26a, 26b of the outer torque receiving portions 24a, 24b of the support 12. In the case of this embodiment, the abutment surfaces 92a, 92b are each formed into a flat surface and have inclined surfaces which are equal to or similar to the torque receiving surfaces 26a, 26b.

According to the disc brake apparatus as described above, the reduction in weight and production costs of the disc brake apparatus can be realized while adopting the configuration in which the braking torque in the outer brake pad is received directly by the support.

According to the disc brake apparatus as described above, the rattling noise and squeal noise can be suppressed more inexpensively than the conventional disc brake apparatuses.

According to the brake pad as described above, compared with the conventional brake pads, the backlash in the radial direction of the rotor can be suppressed. Because of this, compared with a case where the conventional brake pads are adopted, the generation of rattling noise or squeal noise can be suppressed.

According to the brake pad as described above, the brake pad can contribute to the reduction in size and weight of the disc brake apparatus as a whole. Additionally, compared with the conventional brake pads, the backlash in the radial direction of the rotor can be suppressed. Because of this, compared with a case where the conventional brake pads are adopted, the generation of rattling noise or squeal noise can be suppressed.

Further embodiments of the present invention are as follows:

1. A disc brake apparatus, comprising:

a support;
a caliper, held to the support via a guide pin so as to slide in an axial direction of a rotor, and including a claw portion; and
an outer brake pad loosely fitted to the claw portion of the caliper so as to be held thereto,
wherein the support includes:

a pair of inner torque receiving portions which are disposed on an inner side of the rotor, and which are respectively disposed on a rotation entrance side and a rotation exit side of the rotor to receive braking torque applied by an inner brake pad;
an inner bridge portion which connects together the pair of inner torque receiving portions;
a pair of rotor pass portions which respectively protrude from the pair of inner torque receiving portions in the axial direction of the rotor so as to over the rotor; and
a pair of outer torque receiving portions which receive braking torque applied by the outer brake pad at distal end parts of the rotor pass portions, and

wherein a width between the pair of outer torque receiving portions and a width of the outer brake pad in a circumferential direction of the rotor are determined so that a gap in the circumferential direction between the outer brake pad loosely fitted and the claw portion is larger than a gap defined between the outer brake pad and the outer torque receiving portions.

2. The disc brake apparatus as set forth in embodiment 1, wherein

the outer torque receiving portions have torque receiving surfaces which are formed by flat machining the rotor pass portions.

3. The disc brake apparatus as set forth in embodiments 1 or 2, wherein
a recess portion is provided in the claw portion, and
a protruding portion is provided on the outer brake pad so as to be loosely fitted to the recess portion.

4. The disc brake apparatus as set forth in embodiment 3, wherein
the protruding portion has an elliptic shape or an oval shape viewed in the axial direction of the rotor in which a major axis is directed in the radial direction of the rotor and a minor axis is directed in the circumferential direction of the rotor, and
the recess portion has a circular shape having a diameter which is longer than the major axis.

5. The disc brake apparatus as set forth in embodiment 3, wherein
the protruding portion has a circular shape,
the recess portion has an elliptic shape or an oval shape viewed in the axial direction of the rotor in which a major axis is directed in the circumferential direction of the rotor and a minor axis is directed in the circumferential direction of the rotor, and
a length of the minor axis is longer than a diameter of the circular shape.

6. A disc brake apparatus, comprising:

a caliper including a caliper main body with a cylinder and a claw portion which is provided in an opposite position to the caliper main body; and
an outer brake pad loosely fitted to the claw portion so as to be held thereto,
wherein the claw portion includes flange portions which are respectively disposed on a rotation entrance side and a rotation exit side of a rotor with respect to a center position of the caliper, and
loosely fitting portions in which a pair of protruding portions provided on the outer brake pad are loosely fitted are provided in the flange portions respectively.

7. The disc brake apparatus as set forth in embodiment 6, wherein
each of the flange portions has a step portion between a surface of the claw portion which oppositely faces the outer brake pad and itself so as to define a gap between the outer brake pad and itself.

8. The disc brake apparatus as set forth in embodiments 6 or 7, wherein
a pair of claw portions like the claw portion are provided on the rotation entrance side and the rotation exit side of the rotor with respect to the center position of the caliper so as to hold oppositely facing positions of the cylinder therebetween, and
one of the flange portions is provided at a rotation entrance side of the claw portion which is provided on the rotation entrance side of the rotor, and the other of the flange portions is provided at a rotation exit side of the claw portion which is provided on the rotation exit side of the rotor.

9. The disc brake apparatus as set forth in any one of embodiments 6 to 8, wherein
one of the loosely fitting portions in one of the flange portions which is provided on the rotation entrance side of the rotor is provided further towards the  rotation entrance side than an outer wall of the cylinder, and
the other of the loosely fitting portions in the other of the flange portion which is provided on the rotation exit side of the rotor is provided further towards the rotation exit side than the outer wall of the cylinder.

10. The disc brake apparatus as set forth in any one of embodiments 6 to 9, wherein
a thickness of the flange portion in an axial direction of the rotor is thinner than a thickness of the claw portion in the axial direction of the rotor.

11. The disc brake apparatus as set forth in any one of embodiments 6 to 10, wherein
positions of the loosely fitting portions with respect to a radial direction of the rotor are disposed inner side of the rotor in the radial direction of the rotor than a position of the cylinder with respect to the radial direction of the rotor.

12. A brake pad, configured to be held by a caliper which includes a claw portion formed with a plurality of loosely fitting portions in an inner wall thereof, wherein a length of the loosely fitting portions in a circumferential direction of a rotor is equal to or longer than a length of the loosely fitting portions in a radial direction of the rotor, and configured to transmit braking torque to a support which holds the caliper, the brake pad comprising:

a plurality of protruding portions which are respectively loosely fitted in the loosely fitting portions ,
wherein a shape of each of the protruding portions viewed from the axial direction of the rotor has a major axis which is directed in the radial direction of the rotor and a minor axis which is directed in the circumferential direction of the rotor.

13. The brake pad as set forth in embodiment 12, wherein

the loosely fitting portions are provided two positions along the circumferential direction of the rotor, and a distance between the two loosely fitting portions is determined so that a distance between the plurality of or two protruding portions loosely fitted in the loosely fitting portions is shorter than the distance between the two protruding portions.

14. The brake pad as set forth in embodiment 12, wherein the loosely fitting portions are provided two positions along the circumferential direction of the rotor, and a distance between the two loosely fitting portions is determined so that a distance between the plurality of or two protruding portions loosely fitted in the loosely fitting portions is equal to the distance between the two protruding portions.

15. The brake pad as set forth in embodiment 12, wherein the loosely fitting portions are provided two positions along the circumferential direction of the rotor, and a distance between the two loosely fitting portions is determined so that a distance between the plurality of or two protruding portions loosely fitted in the loosely fitting portions is longer than the distance between the two protruding portions.

16. The brake pad as set forth in any one of embodiments 12 to 15, wherein the shape of each of the protruding portions is one of an oval shape, an elliptic shape, a parallelogram shape and a polygonal shape.

17. The brake pad as set forth in embodiment 16, wherein the shape of each of the protruding portions is one of a parallelogram shape and a polygonal shape, and an arc portion is provided at each apex of the shape.

18. An outer brake pad for a floating disc brake apparatus, configured to be held by a caliper which includes a claw portion formed with a plurality of loosely fitting portions in an inner wall thereof , wherein a length of each of the loosely fitting portions in a circumferential direction of a rotor is equal to or longer than a length of each of the loosely fitting portions a radial direction of the rotor, and configured to transmit braking torque to a support which holds the caliper, the outer brake pad comprising:

a plurality of protruding portions which are respectively loosely fitted in the loosely fitting portions, wherein a shape of each of the protruding portions viewed from an axial direction of the rotor has a major axis which is directed in the radial direction of the rotor and a minor axis which is directed in the circumferential direction of the rotor, and wherein an abutment portion of the outer brake pad configured to come in contact with the support is provided at outer side of the rotor in the radial direction of the rotor than a peripheral edge of the rotor.

19. The outer brake pad as set forth in embodiment 18, wherein the abutment portion is configured to surface contact a torque receiving surface of the support.

## Claims

1. An outer brake pad for a floating disc brake apparatus, configured to be held by a caliper which includes a claw portion formed with a plurality of loosely fitting portions in an inner wall thereof, wherein a length of each of the loosely fitting portions in a circumferential direction of a rotor is equal to or longer than a length of each of the loosely fitting portions a radial direction of the rotor, and configured to transmit braking torque to a support which holds the caliper, the outer brake pad comprising:

a plurality of protruding portions which are respectively loosely fitted in the loosely fitting portions, wherein a shape of each of the protruding portions viewed from an axial direction of the rotor has a major axis which is directed in the radial direction of the rotor and a minor axis which is directed in the circumferential direction of the rotor, and wherein an abutment portion of the outer brake pad configured to come in contact with the support is provided at outer side of the rotor in the radial direction of the rotor than a peripheral edge of the rotor.

2. The outer brake pad as set forth in Claim 1, wherein the abutment portion is configured to surface contact a torque receiving surface of the support.

*Fig. 1*

DIRECTION OF
ROTOR ROTATION

*Fig. 2*

## Fig. 3

DIRECTION OF
ROTOR ROTATION

## Fig. 4

DIRECTION OF
ROTOR ROTATION

## Fig. 5

## Fig. 6

Fig. 7

Fig. 8

Fig. 9

*Fig. 10*

*Fig. 11*

*Fig. 12*

*Fig. 13*

*Fig. 14*

*Fig. 15*

*Fig. 16*

*Fig. 17*

*Fig. 18*

Fig. 19

Fig. 20

## Fig. 21

Fig. 22

## Fig. 23

*Fig. 24*

*Fig. 25*

DIRECTION OF
ROTOR ROTATION

*Fig. 26*

*Fig. 27*

*Fig. 28*

*Fig. 29*

*Fig. 30*

*Fig. 31A*

*Fig. 31B*

Fig. 32

82a

90a

92a

48a

86

RADIAL DIRECTION
OF ROTOR

88a

CIRCUMFERENTIAL DIRECTION
OF ROTOR

Fig. 33

82a

90a

92a

48a

86

RADIAL DIRECTION
OF ROTOR

88a

CIRCUMFERENTIAL DIRECTION
OF ROTOR

Fig. 34

82a

90a

92a

48a

86

RADIAL DIRECTION
OF ROTOR

88a

CIRCUMFERENTIAL DIRECTION
OF ROTOR

Fig. 35

RADIAL DIRECTION
OF ROTOR

CIRCUMFERENTIAL DIRECTION
OF ROTOR

Fig. 36

RADIAL DIRECTION
OF ROTOR

CIRCUMFERENTIAL DIRECTION
OF ROTOR

Fig. 37

RADIAL DIRECTION
OF ROTOR

CIRCUMFERENTIAL DIRECTION
OF ROTOR

Fig. 38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10030659 A
- JP 2000104764 A
- JP 10026152 A
- JP 8261256 A
- JP 8240232 A
- JP 2000097260 A